# EUROPEAN PATENT APPLICATION

(11) **EP 4 750 202 A1**
(43) Date of publication of application: **27.05.2026**
(21) Application number: 23945932.4
(22) Date of filing: 20.07.2023
(51) Int. Cl.: H04W 72/232, H04W 16/28

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP); SUN, Weiqi, Beijing 100190 (CN); WANG, Jing, Beijing 100190 (CN); CHEN, Lan, Beijing 100190 (CN)
(74) Representative: Hoffmann Eitle
(86) International application number: PCT/JP2023/026681
(87) International publication number: WO 2025/017930

(57) **Abstract**

A terminal according to one aspect of the present disclosure includes: a receiving section that receives at least one of first information related to a maximum rank for a first transmission scheme and second information related to a maximum rank for a second transmission scheme, and downlink control information having a field used to indicate association between a phase tracking reference signal (PTRS) and a demodulation reference signal (DMRS); and a control section that judges the number of bits of the field, based on at least one of the first information and the second information when the second transmission scheme is configured.

## Description

### Technical Field

The present disclosure relates to a terminal, a radio communication method, and a base station in next-generation mobile communication systems.

### Background Art

In a Universal Mobile Telecommunications System (UMTS) network, the specifications of Long Term Evolution (LTE) have been drafted for the purpose of further increasing high speed data rates, providing lower latency and so on (Non-Patent Literature 1). In addition, for the purpose of further high capacity, advancement and the like of LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In a future radio communication system, a UE can use one of multiple panels (or multiple beams) for uplink (UL) transmission. In Rel. 18 or later versions, it is studied to support simultaneous transmission across multiple panels (STxMP) using multiple panels toward one or more transmission/reception points (TRPs), in order to improve UL throughput/reliability.

However, how to perform control when UL transmission using multiple panels (for example, simultaneous UL transmission) is supported has not been sufficiently studied. Unless UL transmission using multiple panels is performed appropriately, deterioration of system performance such as degradation in throughput may occur.

Thus, an object of the present disclosure is to provide a terminal, a radio communication method, and a base station that enable appropriate control of UL transmission even when UL transmission is performed by using multiple panels.

### Solution to Problem

A terminal according to one aspect of the present disclosure includes: a receiving section that receives at least one of first information related to a maximum rank for a first transmission scheme and second information related to a maximum rank for a second transmission scheme, and downlink control information having a field used to indicate association between a phase tracking reference signal (PTRS) and a demodulation reference signal (DMRS); and a control section that judges the number of bits of the field, based on at least one of the first information and the second information when the second transmission scheme is configured.

### Advantageous Effects of Invention

According to one aspect of the present disclosure, it is possible to appropriately control UL transmission even when UL transmission is performed by using multiple panels.

### Brief Description of Drawings

[FIG. 1] FIG. 1A and FIG. 1B are diagrams to show examples of single-panel transmission.
[FIG. 2] FIG. 2A to FIG. 2C are diagrams to show examples of multi-panel transmission.
[FIG. 3] FIG. 3A to FIG. 3D are diagrams to show examples of single-DCI based STxMP.
[FIG. 4] FIG. 4A and FIG. 4B are diagrams to show an example of single-DCI based STxMP.
[FIG. 5] FIG. 5 is a diagram to show an example of dynamic switching between a single-TRP PUSCH and an SDM PUSCH.
[FIG. 6] FIG. 6A and FIG. 6B are diagrams to show an example of a single-DCI based PUSCH SDM scheme according to a first embodiment.
[FIG. 7] FIG. 7A and FIG. 7B are diagrams to show an example of a single-DCI based PUSCH SFN scheme according to a second embodiment.
[FIG. 8] FIG. 8A and FIG. 8B are diagrams to show an example of multi-DCI based STxMP (for example, PUSCH + PUSCH) according to a third embodiment/fourth embodiment.
[FIG. 9] FIG. 9 is a diagram to show an example of a schematic structure of a radio communication system according to one embodiment.
[FIG. 10] FIG. 10 is a diagram to show an example of a structure of a base station according to one embodiment.
[FIG. 11] FIG. 11 is a diagram to show an example of a structure of a user terminal according to one embodiment.
[FIG. 12] FIG. 12 is a diagram to show an example of a hardware structure of the base station and the user terminal according to one embodiment.
[FIG. 13] FIG. 13 is a diagram to show an example of a vehicle according to one embodiment.

### Description of Embodiments

### (Control of Transmission of SRS and PUSCH)

In Rel-15 NR, a terminal (user terminal, User Equipment (UE)) may receive information used for transmission of a reference signal for measurement (for example, a sounding reference signal (SRS)) (SRS configuration information, for example, a parameter in an RRC control element "SRS-Config").

Concretely, the UE may receive at least one of information related to one or a plurality of SRS resource sets (SRS resource set information, for example, an RRC control element "SRS-ResourceSet") and information related to one or a plurality of SRS resources (SRS resource information, for example, an RRC control element "SRS-Resource").

One SRS resource set may be associated with a certain number of SRS resources (may group a certain number of SRS resources). Each SRS resource may be identified by an SRS resource indicator (SRI) or an SRS resource ID (Identifier).

The SRS resource set information may include an SRS resource set ID (SRS-ResourceSetId), a list of SRS resource IDs (SRS-ResourceId) used in the resource set, an SRS resource type, and information on usage of an SRS.

Here, the SRS resource type may indicate any of a periodic SRS (P-SRS), a semi-persistent SRS (SP-SRS), and an aperiodic CSI (A-SRS). Note that the UE may transmit a P-SRS and an SP-SRS periodically (or periodically after activation), and transmit an A-SRS, based on an SRS request of DCI.

The usage (RRC parameter "usage," L1 (Layer-1) parameter "SRS-SetUse") may be, for example, beam management (beamManagement), codebook (CB), non-codebook (noncodebook (NCB)), antenna switching, or the like. The SRS with codebook or non-codebook usage may be used to determine a precoder for codebook-based or non-codebook-based uplink shared channel (Physical Uplink Shared Channel (PUSCH)) transmission based on an SRI.

For example, in a case of codebook-based transmission, the UE may determine a precoder (precoding matrix) for PUSCH transmission based on the SRI, a transmitted rank indicator (TRI), and a transmitted precoding matrix indicator (TPMI). In a case of non-codebook-based transmission, the UE may determine a precoder for PUSCH transmission, based on the SRI.

The SRS resource information may include an SRS resource ID (SRS-ResourceId), the number of SRS ports, an SRS port number, a transmission Comb, SRS resource mapping (for example, a time and/or frequency resource position, a resource offset, periodicity of the resource, the number of repetitions, the number of SRS symbols, an SRS bandwidth, or the like), hopping related information, an SRS resource type, a sequence ID, spatial relation information of the SRS, or the like.

The spatial relation information of the SRS (for example, an RRC information element "spatialRelationInfo") may indicate spatial relation information between a certain reference signal and the SRS. The certain reference signal may be at least one of a synchronization signal/broadcast channel (Synchronization Signal/Physical Broadcast Channel (SS/PBCH)) block, a channel state information reference signal (CSI-RS), and an SRS (for example, another SRS). The SS/PBCH block may be referred to as a synchronization signal block (SSB).

The spatial relation information of the SRS may include at least one of an SSB index, a CSI-RS resource ID, and an SRS resource ID as an index of the certain reference signal.

Note that, in the present disclosure, an SSB index, an SSB resource ID, and an SSB Resource Indicator (SSBRI) may be interchangeably interpreted. A CSI-RS index, a CSI-RS resource ID, and a CSI-RS Resource Indicator (CRI) may be interchangeably interpreted. An SRS index, an SRS resource ID, and an SRI may be interchangeably interpreted.

The spatial relation information of the SRS may include a serving cell index, a BWP index (BWP ID), or the like corresponding to the certain reference signal.

In a case where the UE is configured, for a given SRS resource, with spatial relation information related to an SSB or a CSI-RS and the SRS, the UE may transmit the SRS resource by using the same spatial domain filter (spatial domain transmission filter) as the spatial domain filter (spatial domain reception filter) for reception of the SSB or the CSI-RS. In this case, the UE may assume that a UE receive beam of the SSB or the CSI-RS and a UE transmit beam of the SRS are the same.

In a case where the UE is configured, for a given SRS (target SRS) resource, with spatial relation information related to another SRS (target SRS) resource and the SRS (target SRS), the UE may transmit the target SRS resource by using the same spatial domain filter (spatial domain transmission filter) as the spatial domain filter (spatial domain transmission filter) for transmission of the reference SRS. In other words, in this case, the UE may assume that a UE transmit beam of the reference SRS and a UE transmit beam of the target SRS are the same.

Based on a value of a certain field (for example, an SRS resource indicator (SRI) field) in a DCI (for example, DCI format 0_1), the UE may determine the spatial relationship of the PUSCH scheduled by the DCI. Concretely, the UE may use, for PUSCH transmission, spatial relation information (for example, an RRC information element "spatialRelationInfo") of the SRS resource determined based on the value of the certain field (for example, an SRI).

In Rel-15/16 NR, when codebook-based transmission is used for a PUSCH, the UE may be configured with an SRS resource set with usage of codebook having up to two SRS resources by RRC, and may be indicated with one of the up to two SRS resources by DCI (1-bit SRI field). A transmit beam of the PUSCH will be specified by the SRI field.

The UE may judge a TPMI and the number of layers (transmission rank) for the PUSCH, based on the precoding information and number of layers field (also referred to as a precoding information field below). The UE may select a precoder from the uplink codebook for the same number of ports as the number of SRS ports indicated by a higher layer parameter "nrofSRS-Ports" configured for the SRS resource specified by the SRI field, based on the TPMI, the number of layers, and the like.

In Rel-15/16 NR, when non-codebook-based transmission is used for a PUSCH, the UE may be configured with an SRS resource set with usage of non-codebook having up to four SRS resources by RRC, and one or more of the up to four SRS resources may be indicated by DCI (2-bit SRI field).

The UE may determine the number of layers (transmission rank) for the PUSCH based on the SRI field. For example, the UE may judge that the number of SRS resources specified by the SRI field is the same as the number of layers for the PUSCH. The UE may compute a precoder of the SRS resource.

In a case where a CSI-RS (which may be referred to as an associated CSI-RS) associated with the SRS resource (or an SRS resource set to which the SRS resource belongs) is configured by a higher layer, a transmit beam of the PUSCH may be computed based on (measurement of) the configured associated CSI-RS. Otherwise, the transmit beam of the PUSCH may be specified by an SRI.

Note that the UE may be configured with a higher layer parameter "txConfig" indicating a transmission scheme as to whether to use codebook-based PUSCH transmission or non-codebook-based PUSCH transmission. The parameter may indicate a value of "codebook" or "nonCodebook."

In the present disclosure, the codebook-based PUSCH (codebook-based PUSCH transmission, codebook-based transmission) may mean a PUSCH of a case where "codebook" is configured as a transmission scheme for the UE. In the present disclosure, a non-codebook-based PUSCH (non-codebook-based PUSCH transmission, non-codebook-based transmission) may mean a PUSCH of a case where "non-codebook" is configured as a transmission scheme for the UE.

In a future radio communication system (for example, Rel-18 NR or later versions), it is assumed to support simultaneous UL transmission (for example, simultaneous multi-panel UL transmission (STxMP)) using a plurality of beams/panels/TRPs toward one or more transmission/reception points (TRPs).

For example, in Rel. 18, simultaneous UL transmission using up to two TRPs/two panels is studied. It is also assumed to configure the total number of layers to be up to four layers across all the panels and the total number of codewords to be up to two across all the panels, in consideration of single-DCI based and multi-DCI based multi-TRP operations. Naturally, the number of TRPs, the number of panels, the number of layers, and the number of codewords are not limited to these.

### (TPMI and Transmission Rank)

In Rel. 16, it is studied that a transmitted precoding matrix indicator (TPMI) and a transmission rank for codebook-based PUSCH transmission are specified by a specific field (for example, a precoding information and number of layers field) included in downlink control information (for example, DCI format 0_1). Note that, in the present disclosure, a rank and a layer may be interchangeably interpreted.

A precoder used by a UE for codebook-based PUSCH transmission may be selected from an uplink codebook having the same number of antenna ports as a value configured by a higher layer parameter (for example, nrofSRS-Ports) configured for an SRS resource.

The size (number of bits) of the specific field is variable depending on the number of antenna ports for PUSCH (for example, the number of ports indicated by nrofSRS-Ports above) and some higher layer parameters.

The specific field may be of 0 bits when a higher layer parameter (for example, txConfig) configured for the UE is configured at nonCodebook.

The specific field may be of 0 bits when a higher layer parameter (for example, txConfig) configured for the UE is configured at codebook for one antenna port.

When a higher layer parameter (for example, txConfig) configured for the UE is configured at codebook for four antenna ports, the specific field may have a bit length of 2 to 6 bits, based on at least one of another higher layer parameter configured for the UE and presence or absence (enabling or disabling) of a transform precoder.

When a higher layer parameter (for example, txConfig) configured for the UE is configured at codebook for two antenna ports, the specific field may have a bit length of 1 to 4 bits, based on at least one of another higher layer parameter configured for the UE and presence or absence (enabling or disabling) of a transform precoder.

The other higher layer parameter may be at least one of a parameter for specifying a UL full power transmission mode (for example, ul-FullPowerTransmission, ul-FullPowerTransmission-r16), a parameter indicating a maximum value of a UL transmission rank (for example, maxRank), a parameter indicating a subset of a given precoding matrix indicator (PMI) (for example, codebookSubset), and a parameter for specifying a transform precoder (for example, transformPrecoder).

### (Single-panel Transmission)

At least one of transmission schemes A and B below (single-panel UL transmission schemes A and B) may be applied to single-panel UL transmission or a single-panel UL transmission scheme candidate. Note that, in the present disclosure, a panel/UE panel may be interpreted as a UE capability value set reported for each UE capability. In the present disclosure, different panels, different spatial relationships, different joint TCI states, different TPC parameters, different antenna ports, and the like may be interchangeably interpreted.

### <Transmission Scheme A: Single-panel Single-TRP UL Transmission>

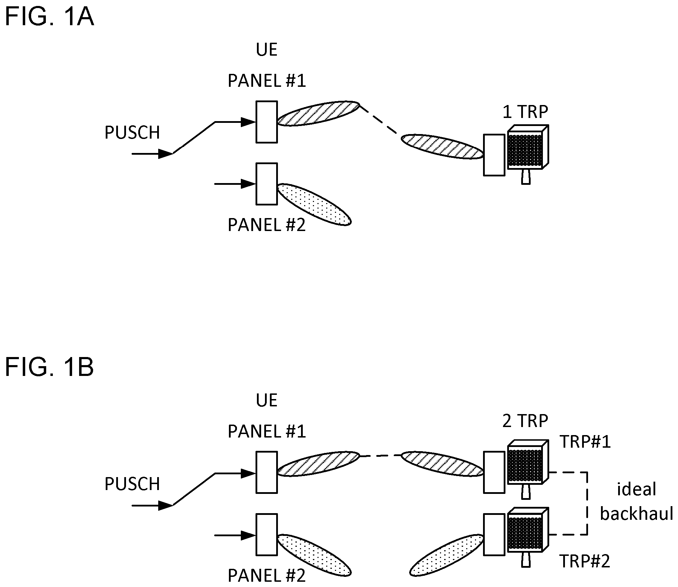

In Rel-15 and Rel-16, a UE employs a transmission scheme of transmitting UL to one TRP at one time point from only one beam and one panel (FIG. 1A).

### <Transmission Scheme B: Single-panel Multi-TRP UL Transmission>

In Rel. 17, it is studied to perform UL transmission from only one beam and one panel at one time point and perform repetition transmissions to a plurality of TRPs (FIG. 1B). In the example in FIG. 1B, a UE transmits a PUSCH from panel #1 to TRP #1 (switches the beam and the panel) and then transmits the PUSCH from panel #2 to TRP #2. The two TRPs are connected via ideal backhaul.

### (Multi-panel Transmission)

In Rel. 18 or later versions, it is studied to support simultaneous UL transmission using multiple panels (for example, simultaneous multi-panel UL transmission (STxMP)) toward one or more TRPs, to improve UL throughput/reliability. For a certain UL channel (for example, a PUSCH/PUCCH) and the like, a multi-panel UL transmission scheme is under study.

For example, for multi-panel UL transmission, up to X (for example, X = 2) and up to Y (for example, Y = 2) panels may be supported. Note that the values of X and Y are not limited to these. In multi-panel UL transmission, when UL precoding indication for a PUSCH is supported, a codebook of an existing system (for example, Rel. 16 or earlier versions) may be supported for multi-panel simultaneous transmission. In a case of considering single-DCI and multi-DCI based multi-TRP operations, the number of layers may be up to x (for example, x = 4) in all panels, and the number of codewords (CWs) may be up to y (for example, y = 2) in all panels. Note that the values of x and y are not limited to these.

As the multi-panel UL transmission scheme or the multi-panel UL transmission scheme candidate, at least one of schemes 1 to 3 below (multi-panel UL transmission schemes 1 to 3) is studied. Only one of transmission schemes 1 to 3 may be supported. A plurality of schemes including at least one of transmission schemes 1 to 3 may be supported, and one of the plurality of transmission schemes may be configured for the UE.

### <Transmission Scheme 1: Coherent Multi-panel UL Transmission>

A plurality of panels may be synchronized with each other. All layers are mapped to all panels. Multiple analog beams are indicated. An SRS resource indicator (SRI) field may be enhanced. This scheme may use up to four layers for UL.

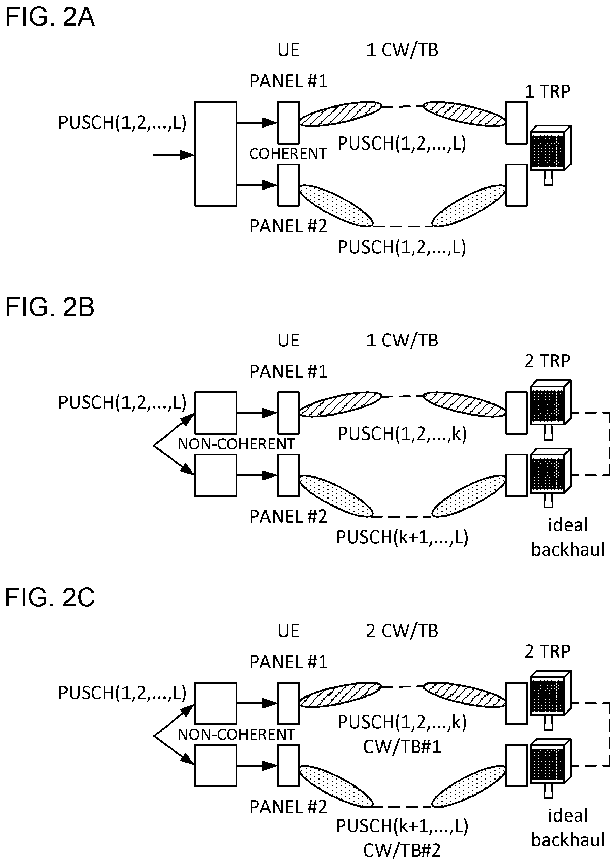

In the example in FIG. 2A, a UE maps one codeword (CW) or one transport block (TB) to L layers (PUSCH (1, 2, ..., L)) and transmits the L layers from each of two panels. Panel #1 and panel #2 are coherent. Transmission scheme 1 can obtain gain by diversity. The total number of layers in the two panels is 2L. When the maximum value of the total number of layers is four, the maximum value of the number of layers in one panel is two.

### <Transmission Scheme 2: Non-coherent Multi-panel UL Transmission with One Codeword (CW) or Transport Block (TB)>

Multi panels need not be synchronized. Different layers are mapped to different panels and one CW or TB for PUSCHs from multiple panels. Layers corresponding to one CW or TB may be mapped to multiple panels. This transmission scheme may use up to four layers or up to eight layers for UL. When up to eight layers are supported, this transmission scheme may support one CW or TB using up to eight layers.

In the example in FIG. 2B, a UE maps one CW or one TB to k layers (PUSCHs (1, 2, ..., k)) and (L - k) layers (PUSCHs (k + 1, k + 2, ..., L)), transmits the k layers from panel #1 while transmitting the (L - k) layers from panel #2. Transmission scheme 2 can obtain gain by multiplexing and diversity. The total number of layers in the two panels is L.

### <Transmission Scheme 3: Non-coherent Multi-panel UL Transmission with Two CWs or TBs>

Multiple panels need not be synchronized. Different layers are mapped to different panels and two CWs or TBs for PUSCHs from multiple panels. Layers corresponding to one CW or TB may be mapped to one panel. Layers corresponding to a plurality of CWs or TBs may be mapped to different panels. This transmission scheme may use up to four layers or up to eight layers for UL. When up to eight layers are supported, this transmission scheme may support up to four layers per CW or TB.

In the example in FIG. 2C, a UE maps CW #1 or TB #1 of two CWs or two TBs to k layers (PUSCHs (1, 2, ..., k)), maps CW #2 or TB #2 to (L - k) layers (PUSCHs (k + 1, k + 2, ..., L)), and transmits the k layers from panel #1 while transmitting the (L - k) layers from panel #2. Transmission scheme 3 can obtain gain by multiplexing and diversity. The total number of layers in the two panels is L.

In each of the above transmission schemes, a base station may configure or indicate panel-specific transmission for UL transmission by using UL TCI or a panel ID. The UL TCI (UL TCI state) may be based on signaling similar to DL beam indication supported in Rel. 15. The panel ID may be implicitly or explicitly applied to transmission of at least one of a target RS resource or a target RS resource set, a PUCCH, an SRS, and a PRACH. When the panel ID is explicitly notified, the panel ID may be configured in at least one of the target RS, a target channel, and a reference RS (for example, a DL RS resource configuration or spatial relation information).

### (Simultaneous Multi-panel Transmission)

In Rel. 18 or later versions, multi-panel UL transmission (for example, simultaneous multi-panel transmission (Simultaneous Transmission across Multiple Panels (STxMP))) for a PUSCH schedule based on one DCI (single DCI)/PUSCH schedule based on a plurality of pieces of DCI (multi-DCI) in one or more of the above-described transmission schemes/modes is under study.

### <Single-DCI Based STxMP>

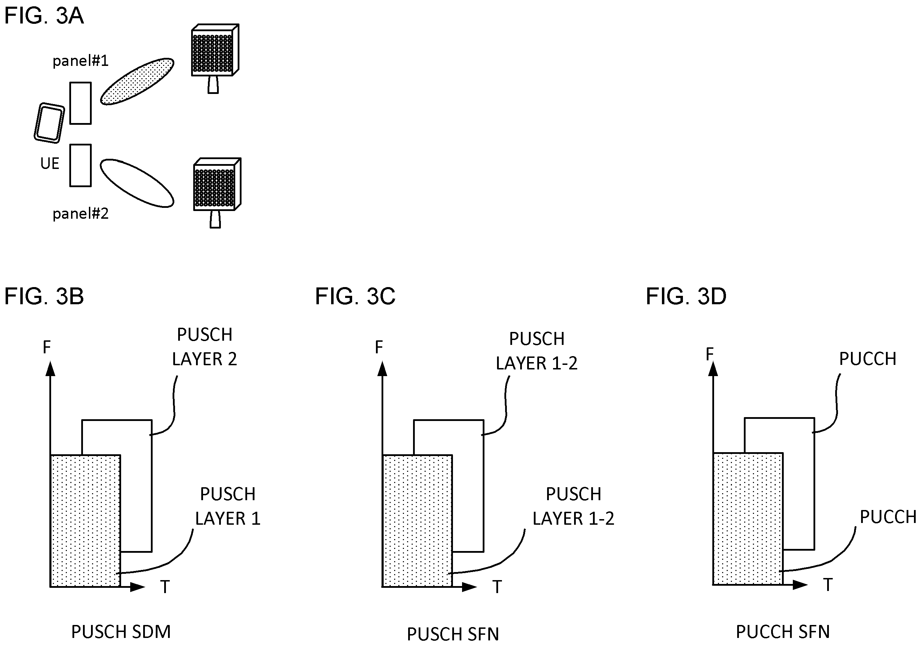

In Rel. 18 or later versions, a UE having a plurality of panels (for example, panel #1 and panel #2) may support simultaneous multi-panel transmission (STxMP) in a single-DCI based multi-TRP system (see FIG. 3A). In single-DCI based STxMP, the following schemes may be applied to UL transmission (for example, a PUSCH, a PUCCH, or a PUSCH + PUCCH).
- Space division multiplexing (SDM) scheme (PUSCH): Different layers/DMRS ports of one PUSCH are precoded separately and transmitted simultaneously from different UE panels/beams (see FIG. 3B).
- Single frequency network (SFN) based transmission scheme (PUSCH): All layers/DMRS ports of one PUSCH are transmitted simultaneously from two different UE panels/beams (see FIG. 3C).
- Single frequency network (SFN) based transmission scheme (PUCCH): One PUCCH is transmitted simultaneously from different panels (see FIG. 3D).

FIG. 3B shows an example of a case where a single-DCI based PUSCH SDM scheme is applied. The UE may assume that PUSCH repetition transmissions to which the SDM is applied are scheduled to the same time resource and the same frequency resource. In other words, when a plurality of coherent panels are used, the UE may transmit the PUSCH repetition transmissions to which the SDM is applied, in the same time resource and the same frequency resource. FIG. 3B shows a case where the time and frequency resources of layer #1 and layer #2 corresponding to a PUSCH are the same.

The example in FIG. 3B may be applied to a case where the SDM is applied to one CW (or TB) or may be applied to a case where the SDM is applied to two CWs (or TBs). When the SDM is applied to two CWs, two CWs transmitted simultaneously from two different panels are space-multiplexed.

FIG. 3C shows an example of a case where a single-DCI based PUSCH SFN-based transmission scheme is applied. In the SFN, the UE transmits the same signal to the same RE from each panel corresponding to a different TCI state (for example, joint/UL TCI state). Here, all layers (for example, layers #1 and #2)/DMRS ports of one PUSCH are transmitted simultaneously from two different UE panels (for example, panel #1 and panel #2).

FIG. 3D shows an example of a case where a single-DCI based PUCCH SFN-based transmission scheme is applied. Here, one PUCCH is transmitted simultaneously from different panels (for example, panel #1 and panel #2).

In the single-DCI based PUSCH SDM scheme/SFN scheme, a plurality of (for example, two) SRS resource sets may be configured, and a plurality of (for example, two) SRI fields/TPMI fields may be indicated.

In the single-DCI based PUCCH SFN scheme, a plurality of (for example, two) TCI states may be applied to one PUCCH resource.

### <Multi-DCI Based STxMP>

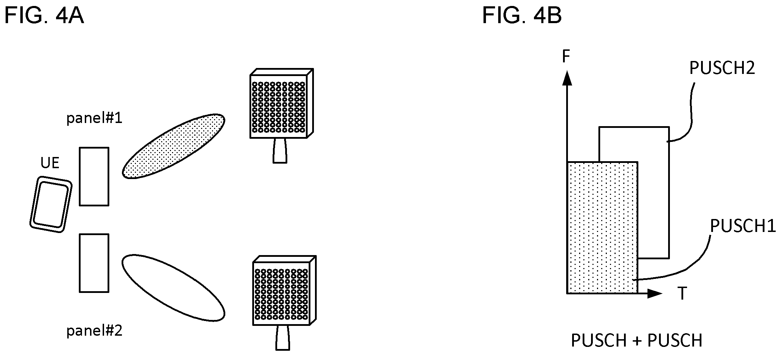

In Rel. 18 or later versions, a UE having a plurality of panels (for example, panel #1 and panel #2) may support simultaneous multi-panel transmission (STxMP) in a multi-DCI based multi-TRP system (see FIG. 4A). In the multi-DCI based STxMP, simultaneous transmission of UL channels/UL signals (for example, PUSCH + PUSCH) may be supported (see FIG. 4B). For example, two PUSCHs overlapping in the time domain are transmitted simultaneously from different UE panels/beams.

A UE may transmit two independent PUSCHs associated with different TRPs simultaneously in the same active BWP. The sum of the numbers of layers corresponding to two independent PUSCHs may be defined as up to X (or X or less). X may be, for example, 4 or may be another value. The maximum number of layers for each of the two PUSCHs may be X/2 (for example, two) or another value. The two independent PUSCHs may be associated with different CORESET pool indices.

In the multi-DCI based PUSCH + PUSCH, a plurality of (for example, two) SRS resource sets may be configured, and the two SRS resource sets may be associated with different (for example, two) CORESET pool indices, respectively.

### (PTRS)

In Rel-15 NR, a phase tracking reference signal (PTRS) is supported. A base station may transmit PTRSs in the downlink. The base station may map the PTRSs consecutively or non-consecutively in the time direction in a certain number of (for example, one) subcarriers for transmission.

A UE may receive the PTRSs, for example, in at least a part of a period (slot, symbol, or the like) in which a downlink shared channel (Physical Downlink Shared Channel (PDSCH)) is scheduled (in other words, a period in which the PDSCH is received). The PTRSs transmitted by the base station may be referred to as DL PTRSs.

The UE may transmit PTRSs in the uplink. The UE may map the PTRSs consecutively or non-consecutively in the time direction in a certain number of (for example, one) subcarriers for transmission.

The UE may transmit the PTRSs, for example, in at least a part of a period (slot, symbol, or the like) in which an uplink shared channel (Physical Uplink Shared Channel (PUSCH)) is scheduled (in other words, a period in which the PUSCH is transmitted). The PTRS transmitted by the UE may be referred to as a UL PTRS.

The base station or the UE may determine phase noise, based on the received PTRSs, and correct a phase error of the received signal (for example, the PUSCH or the PDSCH).

The UE may be configured with PTRS configuration information (PTRS-DownlinkConfig for DL and PTRS-UplinkConfig for UL) by using higher layer signaling. For example, the PTRS configuration information may be included in configuration information of a demodulation reference signal (DMRS) for the PDSCH or the PUSCH (DMRS-DownlinkConfig, DMRS-UplinkConfig).

### (PTRS and DMRS)

In NR (for example, Rel. 15), a DMRS port associated with a PTRS port is assumed to be QCLed for QCL types A and D. In other words, when a given PTRS port is associated with a given DMRS port, it may be assumed that the PTRS port and the DMRS port are in a relationship of QCL types A and D with each other.

It is supported that the association between the PTRS port and the DMRS port (for example, PTRS-DMRS association) is indicated by a certain field of DCI. The certain field may be referred to as a PTRS and DMRS association field or yield (for example, a PTRS-DMRS association field).

In Rel-16 NR, it is agreed to support up to two PTRS ports (a first PTRS port and a second PTRS port) for single-PDCCH based multi-panel/TRP transmission. A UE may be notified of the number of PTRS ports to be applied/configured (for example, one or two PTRS ports), by a higher layer parameter.

When one PTRS port (for example, PTRS port #0) is configured, the association between a PTRS and a DMRS may be determined based on a codepoint specified in the PTRS-DMRS related field of DCI and the correspondence (for example, table) between each codepoint and a DMRS port. The correspondence (for example, table) between each codepoint and a DMRS port may be predefined.

When two PTRS ports (for example, PTRS port #0 and PTRS port #1) are configured, the association between each PTRS and a DMRS may be determined based on a codepoint specified in the PTRS-DMRS related field of DCI and the correspondence (for example, table) between each codepoint and a DMRS port. The correspondence (for example, table) between each codepoint and a DMRS port may be predefined.

Information related to the DMRS (for example, a first DMRS/second DMRS) sharing PTRSs (here, PTRSs #0 and #1) may be predefined in a specification, or a base station may explicitly or implicitly notify a UE of the information by DCI/RRC.

For example, a PUSCH antenna port corresponding to each PTRS port may be defined/configured in advance, and the UE may be notified of certain information related to the correspondence between the PUSCH antenna port and a DMRS port by DCI/RRC. The UE may judge the association between the DMRS port and the PTRS port, based on the information related to the correspondence between the DMRS port and the PUSCH antenna port notified by the base station and the predefined correspondence between the PUSCH antenna port and the PTRS port.

The certain information related to the correspondence between the PUSCH antenna port and the DMRS port may be indicated to the UE by a certain field included in the DCI (for example, the DCI used for scheduling of a PUSCH). The certain field may be at least one of a "precoding information and number of layers" field and an "antenna ports" field.

In Rel. 17, multi-TRP PUSCH repetition using time division multiplexing (TDM) (for example, TDM M-TRP PUSCH repetition) is supported. PTRS-DMRS association may be indicated in units of TRP.

When one PTRS port is used with the maximum rank of 2 (for example, maxrank = 2), the PTRS-DMRS association of two TRPs may be indicated by a PTRS-DMRS association field (for example, one field). For example, the MSB of the PTRS-DMRS association field may indicate the first TRP, and the LSB of the PTRS-DMRS association field may indicate the second TRP.

When one or two PTRS ports are used with the maximum rank greater than 2 (for example, maxrank > 2), the PTRS-DMRS association of two TRPs may be indicated by a PTRS-DMRS association field and a second PTRS-DMRS association field.

### (PTRS Port in STxMP)

In Rel. 18, it is assumed that up to two PTRS ports are configured for the SDM scheme of single-DCI based STxMP PUSCH transmission. For the two PTRS ports, PTRS-DMRS association for the SDM scheme may be indicated by using a PTRS-DMRS association field of a DCI format (for example, DCI format 0_1/0_2).

When up to two PTRS ports are configured for the single-DCI based STxMP PUSCH SDM scheme, the actual number of PTRS ports in the SDM is two, and a 2-bit PTRS-DMRS association field may be applied in order to indicate PTRS-DMRS association for DMRS ports associated with two TPMI/SRI fields.

The MSB of the PTRS-DMRS association field may indicate association between PTRS port #0 and a DMRS port. The DMRS port (or PTRS port #0 and the DMRS port) may be associated with a first TPMI/SRI field.

The LSB of the PTRS-DMRS association field may indicate association between PTRS port #1 and a DMRS port. The DMRS port (or PTRS port #1 and the DMRS port) may be associated with a second TPMI/SRI field.

For the PTRS port index (for example, ptrs-PortIndex) configured for a non-codebook-based PUSCH (NCB PUSCH) of the SDM scheme, the UE may ignore the configuration of the PTRS port index (for example, ptrs-PortIndex) for each SRS resource.

An additional RRC parameter related to the maximum number of PTRS ports for the STxMP SDM scheme may be introduced/supported.

For the PTRS ports in the STxMP SDM scheme, different parameters may be used/configured to configure the maximum number of PTRS ports for the SDM scheme and the single-TRP scheme. When the maximum number of PTRS ports is configured at two for the SDM scheme, each PTRS port may be associated with each TPMI/SRI field (or each panel).

For the STxMP SFN scheme, the PTRS may be transmitted in an SFN manner. The same maximum number of PTRS ports may be configured for the SFN scheme and the single-TRP scheme. Information related to the maximum number of PTRS ports may be configured by an RRC parameter of an existing system (for example, Rel. 17) or an earlier system.

The maximum rank (for example, max rank) in the STxMP SDM scheme/STxMP SFN scheme and the maximum rank in the single-TRP scheme may be configured separately. For example, different parameters may be used for the configurations of the maximum rank for the SFN and the single TRP. Different parameters may be used for the configurations of the maximum rank for the SDM and the single TRP.

### (Scheme Switching in STxMP)

As described above, in future radio communication systems (for example, Rel. 18 or later versions), it is studied that a UE performs simultaneous UL transmission (which may be referred to as simultaneous multi-panel UL transmission (STxMP), for example) using a plurality of beams/panels/TRPs.

Concretely, at least one of the following is studied for STxMP:
- single-DCI PUSCH SDM scheme
- single-DCI PUSCH SFN scheme
- multi-DCI overlapping PUSCH + PUSCH scheme
- single-DCI PUCCH SFN scheme

In a case where a plurality of schemes are supported in simultaneous UL transmission (for example, STxMP), it is also assumed that switching of a plurality of transmission methods/schemes (for example, some or all of the schemes) is supported. For example, it is studied to support switching between the SDM/SFN scheme according to STxMP and the single-TRP scheme.

At least one of a specific field (for example, an SRS resource set indicator) in DCI and a higher layer parameter may be used for switching between the single-DCI based STxMP (scheme) and the single TRP.

The maximum numbers of layers for the single TRP and the STxMP SDM may be configured separately.

In a case of single-TRP transmission, the maximum number of layers may be configured by an RRC parameter maxRank (or Lmax), as in an existing specification.

In a case of the SDM STxMP scheme, one maximum number of layers may be configured for each of a first SRS resource set and a second SRS resource set (apart from maxRank (or Lmax) of the case of the single TRP). The configuration may be, for example, an RRC parameter (for example, maxRankPerSRSResourceSet) indicating the maximum number of layers for each SRS resource set.

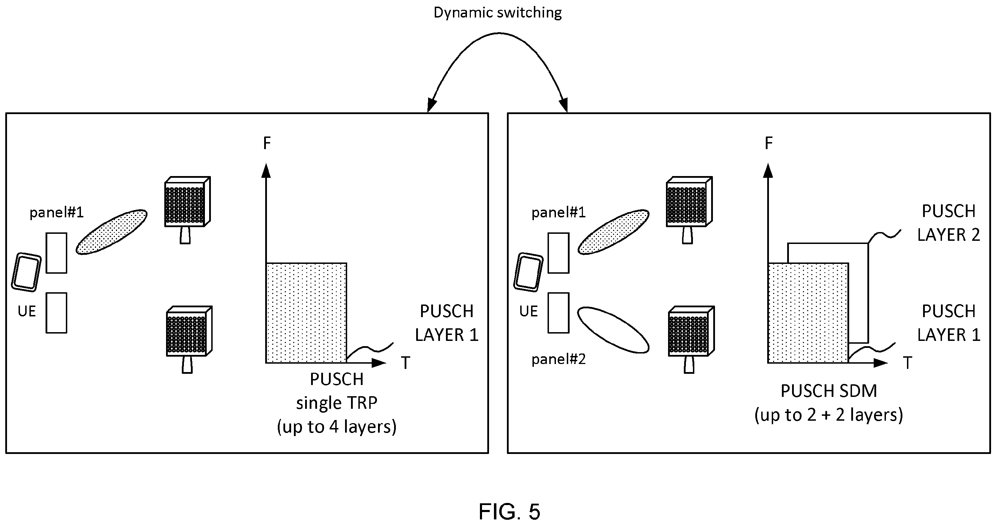

FIG. 5 is a diagram to show an example of the maximum number of layers. In the example shown in FIG. 5, in the case of the single TRP, the RRC parameter maxRank is configured at 4 for a UE. The UE transmits a PUSCH of up to four layers (layer 1) by using a single TRP/single panel (panel #1).

In the example shown in FIG. 5, an RRC parameter (for example, maxRankPerSRSResourceSet) for configuring the maximum number of layers for the STxMP scheme is configured for the UE. For example, when the parameter is configured at 2, the UE transmits each of PUSCHs of up to two layers (layer 1) by using a first TRP/panel (panel #1) and a second TRP/panel (panel #2).

The example shown in FIG. 5 shows an example of dynamic switching between a single TRP PUSCH and SDM PUSCHs.

### (Number of Bits of PTRS-DMRS Related Field)

In Rel. 17 or earlier versions, the number of bits of a certain field (for example, a PTRS-DMRS related field) included in DCI is determined based on the maximum rank (for example, maxRank) or the like. For example, when the maximum rank is 1, the number of bits of the PTRS-DMRS related field is zero, and is two otherwise (for example, when the maximum rank is not 1 and another certain condition is satisfied).

In Rel. 18 or later versions, it is also assumed that a first parameter (for example, maxRank) is used to configure the maximum rank for single-TRP transmission, and another parameter (for example, maxRankSdm) is used to configure the maximum rank for SDM transmission. It is also assumed that another parameter (for example, maxRankSfn) is used to configure the maximum rank for SFN transmission. It is also assumed that another parameter (for example, maxRankMDCI) is used to configure the maximum rank for multi-DCI based STxMP.

In this case, when dynamic switching between single-TRP transmission and another transmission scheme is possible and the maximum rank can be configured separately for the single TRP and another transmission scheme, how to control the number of bits of a PTRS-DMRS related field is a problem.

Thus, the inventors of the present invention studied UL transmission control of a case where a plurality of transmission schemes are supported and where switching of transmission schemes/configuration of a maximum rank for each transmission scheme is performed, and came up with the present embodiment.

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and C."

In the present disclosure, notify, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, other messages (for example, a message from the core network, such as positioning protocol (for example, NR Positioning Protocol A (NRPPa)/LTE Positioning Protocol (LPP)) messages), and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, a panel, a UE panel, a panel group, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, a PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, quasi-co-location (QCL), QCL assumption, and the like may be interchangeably interpreted.

A spatial relation information Identifier (ID) (TCI state ID) and spatial relation information (TCI state) may be interchangeably interpreted. "Spatial relation information" may be interchangeably interpreted as "a set of spatial relation information," "one or a plurality of pieces of spatial relation information," and the like. The TCI state and the TCI may be interchangeably interpreted.

A panel Identifier (ID) and a panel may be interchangeably interpreted. In other words, a TRP ID and a TRP, a CORESET group ID and a CORESET group, and the like may be interchangeably interpreted.

In the present disclosure, a TRP, a transmission point, a panel, a DMRS port group, a CORESET pool, and one of two TCI states associated with one codepoint of a TCI field may be interchangeably interpreted.

In the present disclosure, transmission/reception of a channel/signal using a single TRP may be interpreted as TCI states (joint/separate/indication TCI states) being equal in transmission/reception (for example, NCJT/CJT/repetition) of the channel/signal or the number of TCI states (joint/separate/indication TCI states) being one in the transmission/reception (for example, NCJT/CJT/repetition) of the channel/signal.

Transmission/reception of a channel/signal using a single TRP may be interpreted as TCI states (joint/separate/indication TCI states) being different from each other in transmission/reception (for example, NCJT/CJT/repetition) of the channel/signal or the number of different TCI states (joint/separate/indication TCI states) being more than one (for example, two) in the transmission/reception (for example, NCJT/CJT/repetition) of the channel/signal.

In the present disclosure, a single TRP, a single-TRP system, a single-TRP transmission, and a single PDSCH may be interchangeably interpreted. In the present disclosure, multi(multiple)-TRP, a multi-TRP system, multi-TRP transmission, and multi-PDSCH may be interchangeably interpreted.

In the present disclosure, single DCI, a single PDCCH, single-DCI based multi-TRP, two TCI states on at least one TCI codepoint being activated, at least one codepoint of a TCI field being mapped to two TCI states, and a specific index (for example, a TRP index, a CORESET pool index, or an index corresponding to a TRP) being configured for a specific channel/CORESET may be interchangeably interpreted.

In the present disclosure, a single TRP, a channel/signal using a single TRP, a channel using one TCI state/spatial relation, multi-TRP being not enabled by RRC/DCI, a plurality of TCI states/spatial relations being not enabled by RRC/DCI, and one CORESET pool index (CORESETPoolIndex) value being not configured for any CORESET and any codepoint of a TCI field being not mapped to two TCI states may be interchangeably interpreted.

In the present disclosure, multi-TRP, a channel/signal using multi-TRP, a channel using a plurality of TCI states/spatial relations, multi-TRP being enabled by RRC/DCI, a plurality of TCI states/spatial relations being enabled by RRC/DCI, and at least one of single-DCI based multi-TRP and multi-DCI based multi-TRP may be interchangeably interpreted.

In the present disclosure, multi-DCI based multi-TRP, one CORESET pool index (CORESETPoolIndex) value being configured for a CORESET, and a plurality of specific indices (for example, TRP indices, CORESET pool indices, or indices corresponding to TRPs) being configured for a specific channel/CORESET may be interchangeably interpreted.

In the present disclosure, TRP #1 (first TRP) may correspond to CORESET pool index = 0 or correspond to the first TCI state of two TCI states corresponding to one codepoint of a TCI field. TRP #2 (second TRP) TRP #1 (first TRP) may correspond to CORESET pool index = 1 or correspond to the second TCI state of two TCI states corresponding to one codepoint of the TCI field.

In the present disclosure, single DCI (sDCI), a single PDCCH, a single-DCI based multi-TRP system, sDCI-based MTRP, and two TCI states in at least one TCI codepoint being activated may be interchangeably interpreted.

In the present disclosure, multi-DCI (mDCI), multi-PDCCH, a multi-DCI based multi-TRP system, mDCI-based MTRP, and two CORESET pool indices or CORESET pool index = 1 (or a value equal to one or greater) being configured may be interchangeably interpreted.

In the present disclosure, beam indication DCI, a beam indication MAC CE, and beam indication DCI/MAC CE may be interchangeably interpreted. In other words, indication related to an indicated TCI state for a UE may be performed by using at least one of DCI and a MAC CE.

In the present disclosure, a channel, a signal, and a channel/signal may be interchangeably interpreted. In the present disclosure, a DL channel, a DL signal, a DL signal/channel, transmission/reception of a DL signal/channel, DL reception, and DL transmission may be interchangeably interpreted. In the present disclosure, a UL channel, a UL signal, a UL signal/channel, transmission/reception of a UL signal/channel, UL reception, and UL transmission may be interchangeably interpreted.

In the present disclosure, applying a TCI state/QCL assumption to each channel/signal/resource may mean applying the TCI state/QCL assumption to transmission and reception of each channel/signal/resource.

In the present disclosure, a first TCI state (TCI state indicated first) may correspond to a first TRP. In the present disclosure, a second TCI state (TCI state indicated second) may correspond to a second TRP. In the present disclosure, an n-th TCI state (TCI state indicated n-th) may correspond to an n-th TRP.

In the present disclosure, the value of a first CORESET pool index (for example, 0), the value of a first TRP index (for example, 1), and a first TCI state (first DL/UL (joint/separate) TCI state) may correspond to each other. In the present disclosure, the value of a second CORESET pool index (for example, 1), the value of a second TRP index (for example, 2), and a second TCI state (second DL/UL (joint/separate) TCI state) may correspond to each other.

Note that, in each embodiment of the present disclosure below, a method targeting two TRPs (in other words, a case where at least one of N and M is 2) will be mainly described for application of a plurality of TCI states in transmission and reception using multiple TRPs, but the number of TRPs may be three or more (more than one), and each embodiment may be applied so as to correspond to the number of TRPs. In other words, at least one of N and M may be a number greater than 2.

### (Radio Communication Method)

### <First Embodiment>

A first embodiment relates to an example of UL transmission control (for example, determination of the number of bits of a DCI field or the like) of a case where a multi-panel scheme is configured as an SDM scheme (for example, sdmSchem).

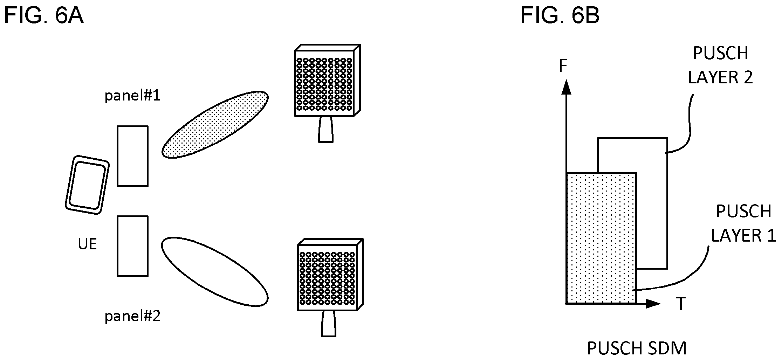

When the multi-panel scheme (for example, multipanelScheme) is configured as the SDM scheme (for example, sdmSchem) (see FIG. 6A and FIG. 6B), the number of bits of a certain field included in DCI may be determined based on at least one of option 1-0 to option 1-4 below. The certain field may be a PTRS-DMRS related field. In the present disclosure, the number of bits may be interpreted as a size, a bit size, or a bit width.

FIG. 6A and FIG. 6B show an example of a single-DCI based PUSCH SDM scheme. Here, PUSCHs to be space-division-multiplexed may be scheduled based on one DCI.

In the following description, a case where a certain field (for example, a PTRS-DMRS related field) of DCI is of 0 or 2 bits will be described as an example, but this is not restrictive. 2 bits may be another value (for example, X bits). In the present disclosure, a PTRS-DMRS related field will be described as an example of the certain field of the DCI, but an applicable field is not limited thereto. The applicable field may be a DCI field in which the number of bits is variable, based on information related to a maximum rank.

### {Option 1-0}

When the multi-panel scheme (for example, multipanelScheme) is configured as the SDM scheme (for example, sdmSchem), the number of bits of the certain field may be determined based on a maximum rank (for example, maxRank) for another transmission/scheme (for example, a single TRP).

For example, when the maximum rank for a single TRP is 1, the number of bits of the certain field may be zero. The certain field of the DCI may be determined in consideration of only the maximum rank for the single TRP (for example, without considering the maximum rank for the SDM).

The maximum rank for the SDM scheme (for example, maxRankSdm) may be determined/judged based on the maximum rank for the single TRP (for example, maxRank). For example, the UE may expect/assume that, when the maximum rank for the single TRP is 1, the maximum rank for the SDM scheme (for example, maxRankSdm) is also 1.

The UE may expect/assume that the maximum rank for the single TRP is always greater than or equal to the maximum rank for the SDM (or the same as the maximum rank for the SDM or greater than the maximum rank for the SDM).

When the maximum rank for the single TRP (for example, maxRank) is greater than 1, the certain field may be determined to be of 2 bits. Note that, even when the maximum rank for the single TRP (for example, maxRank) is greater than 1, the certain field may be determined to be of 0 bits when another condition is satisfied. The other condition may be a case where a PTRS configuration (for example, PTRS-UplinkConfig) is not configured in a certain PUSCH matching type (for example, dmrs-UplinkForPUSCH-MappingTypeA or dmrs-UplinkForPUSCH-MappingTypeB) and the transform precoder is disabled or a case where the ransform precoder is enabled (for example, enabled).

When the multi-panel scheme is configured as the SDM scheme, and the other condition is satisfied or the maximum rank for the single TRP is 1, the UE may judge that the number of bits of the certain field is zero.

As described above, by determining the number of bits of the certain field of DCI in a first transmission scheme (for example, the single TRP) and the number of bits of the certain field of DCI in a second transmission scheme (for example, the SDM scheme), based on the maximum rank for the first transmission scheme, it is possible to simplify determination of the number of bits of the certain field.

### {Option 1-1}

When the multi-panel scheme (for example, multipanelScheme) is configured as the SDM scheme (for example, sdmSchem), the number of bits of the certain field may be determined based on the maximum rank for each of a plurality of transmissions/schemes. Examples of the maximum rank corresponding to each of the plurality of transmissions/schemes may include a maximum rank for the single TRP (for example, maxRank) and a maximum rank for the SDM scheme (for example, maxRankSdm).

For example, when the maximum rank for the single TRP (for example, maxRank) is 1, and the maximum rank for the SDM scheme (for example, maxRankSdm) is 1, the number of bits of the certain field may be zero. In other words, when max{maxRank, maxRankSdm} = 1, the certain field may be of 0 bits.

When either the maximum rank for the single TRP (for example, maxRank) or the maximum rank for the SDM scheme (for example, maxRankSdm) is greater than 1, the certain field may be determined to be of 2 bits.

Note that even when either the maximum rank for the single TRP (for example, maxRank) or the maximum rank for the SDM scheme (for example, maxRankSdm) is greater than 1, the certain field may be determined to be of 0 bits when another condition is satisfied. The other condition may be a case where a PTRS configuration (for example, PTRS-UplinkConfig) is not configured in a certain PUSCH matching type (for example, dmrs-UplinkForPUSCH-MappingTypeA or dmrs-UplinkForPUSCH-MappingTypeB) and the transform precoder is disabled or a case where the ransform precoder is enabled (for example, enabled).

When the multi-panel scheme is configured as the SDM scheme, and the other condition is satisfied or both the maximum rank for the single TRP (for example, maxRank) and the maximum rank for the SDM scheme (for example, maxRankSdm) are 1, the UE may judge that the number of bits of the certain field is zero.

As described above, by determining the number of bits of the certain field of DCI in consideration of both the maximum rank for a first transmission scheme (for example, the single TRP) and the maximum rank for a second transmission scheme (for example, the SDM scheme), it is possible to appropriately determine the number of bits of the certain field even when configuration of a plurality of higher layer parameters related to maximum rank is supported. Even in a case where dynamic switching between the first transmission scheme and the second transmission scheme is supported, it is possible to appropriately determine the number of bits of the certain field.

### <<Variations>>

When the multi-panel scheme (for example, multipanelScheme) is configured as the SDM scheme (for example, sdmSchem), the number of bits of the certain field may be determined based on the maximum rank for each of a plurality of transmissions/schemes and another condition for the SDM. The other condition for the SDM may be a maximum number of PTRS ports for the SDM. The maximum number of PTRS ports for the SDM may be configured for the UE by a higher layer parameter (for example, maxNrofPortsforSDM) for PTRS ports for the SDM.

For example, when the maximum rank for the single TRP (for example, maxRank) is 1, the maximum rank for the SDM scheme (for example, maxRankSdm) is 1, and the maximum number of PTRS ports for the SDM (for example, maxNrofPortsforSDM) is a certain number (for example, two), the number of bits of the certain field may be zero. In other words, when max{maxRank, maxRankSdm} = 1, the certain field may be of 0 bits. In other words, when max{maxRank, maxRankSdm} = 1 and maxNrofPortsforSDM = 2, the certain field may be of 0 bits.

When either the maximum rank for the single TRP (for example, maxRank) or the maximum rank for the SDM scheme (for example, maxRankSdm) is greater than 1, the certain field may be determined to be of 2 bits.

When the maximum rank for the SDM scheme (for example, maxRankSdm) is 1, and the maximum number of PTRS ports for the SDM (for example, maxNrofPortsforSDM) is 1, the certain field may be determined to be of 2 bits. The reason for this is as follows. The maximum rank for the SDM scheme (for example, maxRankSdm) being 1 means that the rank of each panel is 1 and the total rank across the two panels is 2. The maximum number of PTRS ports being two means that each PTRS port is mapped to each layer/each DMRS port and means that the number of bits necessary for indicating PTRS-DMRS association is zero. In contrast, when the maximum number of PTRS ports is 1, the one PTRS port is mapped to one layer/DMRS port selected from two layers/DMRS ports across two panels, and thus indication of a layer/DMRS port associated with the PTRS port is needed.

Option 1-0/1-1 may be applied in a case where dynamic switching between the single TRP and the SDM is supported/configured. When dynamic switching between the single TRP and the SDM is not supported/configured, a network (for example, a base station) may control a PTRS-DMRS related field (for example, the number of bits or the like) by using one higher layer parameter (for example, maxRank or maxRankSdm).

When the multi-panel scheme is configured as the SDM scheme and the dynamic switching between the single TRP and the SDM is not supported/configured, the PTRS-DMRS related field may be determined/judged to be 0 bits if maxRankSdm = 1. When an SRS resource set indicator field is not present, the UE may judge that dynamic switching between the single TRP and the SDM is not supported/configured.

Alternatively, when the multi-panel scheme is configured as the SDM scheme and the dynamic switching between the single TRP and the SDM is not supported/configured, the PTRS-DMRS related field may be determined/judged to be 0 bits if maxRank = 1. In this case, the maximum rank of the SDM (maxRankSdm) may be provided by a higher layer parameter related to the maximum rank (maxRank) of single-TRP transmission.

When the maximum rank for the single TRP is 1, and the maximum rank for the SDM scheme is greater than 1 (maxRank = 1 and maxRankSdm > 1), the transmission/scheme to be applied may be determined by the SRS resource set indicator field. When the SRS resource set indicator field takes a given value (for example, "00" or "01"), this means single-TRP transmission, and the PTRS-DMRS related field may be used as a reserved bit or ignored by the UE.

When the maximum rank for the single TRP is greater than 1, and the maximum rank for the SDM scheme is 1 (maxRank > 1 and maxRankSdm = 1), the transmission/scheme to be applied may be determined by the SRS resource set indicator field. When the SRS resource set indicator field takes a given value (for example, "10" or "11"), this means SDM transmission, and the PTRS-DMRS related field may be used as a reserved bit or ignored by the UE. When the maximum rank for the single TRP is greater than 1, and the maximum rank for the SDM scheme is 1 (maxRank > 1 and maxRankSdm = 1), another condition for the SDM (for example, the maximum number of PTRS ports for the SDM (for example, maxNrofPortsforSDM)) may also be considered. In other words, when the maximum rank for the single TRP is greater than 1, the maximum rank for the SDM scheme is 1, and the maximum number of PTRS ports is a certain value (maxRank > 1, maxRankSdm = 1, and maxNrofPortsforSDM = 2), the transmission/scheme to be applied may be determined by the SRS resource set indicator field.

### {Option 1-2}

The number of bits of a certain field may be determined based on information indicated by DCI and the maximum rank for each transmission/scheme.

The information indicated by DCI may be information indicating either single-TRP transmission or SDM transmission. The information indicated by DCI may be indicated by using an SRS resource set indicator field of the DCI.

The UE may judge the number of bits of a certain field (for example, a PTRS-DMRS related field) based on information indicated by the DCI (for example, an indicated transmission/scheme) and the maximum rank for the transmission/scheme.

When a first value (for example, "00" or "01") is indicated by the SRS resource set indicator field, the number of bits of the certain field may be determined based on the maximum rank for the single TRP. When the first value is indicated by the SRS resource set indicator field, this may mean application of single-TRP transmission.

When the first value is indicated by the SRS resource set indicator field, and the maximum rank for the single TRP (for example, maxRank) is 1, the UE may judge that the certain field is of 0 bits. When the SRS resource set indicator field indicates the first value, and the maximum rank for the single TRP (for example, maxRank) is greater than 1, the UE may judge that the certain field is of 2 bits.

When a second value (for example, "10" (or "11")) is indicated by the SRS resource set indicator field, the number of bits of the certain field may be determined based on the maximum rank for the SDM. When the second value is indicated by the SRS resource set indicator field, this may mean application of SDM transmission.

When the second value is indicated by the SRS resource set indicator field, and the maximum rank for the SDM (for example, maxRankSdm) is 1, the UE may judge that the certain field is of 0 bits. When the SRS resource set indicator field indicates the second value, and the maximum rank for the SDM (for example, maxRankSdm) is greater than 1, the UE may judge that the certain field is of 2 bits.

When the second value (for example, "10" (or "11")) is indicated by the SRS resource set indicator field, the number of bits of the certain field may be determined based on the maximum rank for the SDM and the maximum number of PTRS ports for the SDM. When the second value is indicated by the SRS resource set indicator field, this may mean application of SDM transmission.

When the second value is indicated by the SRS resource set indicator field, the maximum rank for the SDM (for example, maxRankSdm) is 1, and the maximum number of PTRS ports for the SDM (maxNrofPortsforSDM) is two, the UE may judge that the certain field is of 0 bits. When the SRS resource set indicator field indicates the second value, and the maximum rank for the SDM (for example, maxRankSdm) is greater than 1, the UE may judge that the certain field is of 2 bits. When the second value is indicated by the SRS resource set indicator field, the maximum rank for the SDM (for example, maxRankSdm) is 1, and the maximum number of PTRS ports for the SDM (maxNrofPortsforSDM) is 1, the UE may judge that the certain field is of 2 bits.

In option 1-2, the size of the certain field (for example, the PTRS-DMRS related field) may be changed depending on the SRS resource set indicator field. The total DCI size is determined based on the maximum sizes of the PTRS-DMRS related field in different cases, and the total DCI size may be adjusted by zero padding.

As described above, by considering another field (for example, the SRS resource set indicator field of DCI) indicating a transmission scheme and the maximum rank for a corresponding transmission scheme (for example, the maximum rank for a first transmission scheme (for example, the single TRP) or the maximum rank for a second transmission scheme (for example, the SDM scheme)), it is possible to flexibly control the number of bits of the certain field according to the transmission scheme.

### {Option 1-3}

When the multi-panel scheme (for example, multipanelScheme) is configured as the SDM scheme (for example, sdmSchem), the number of bits of a certain field (for example, a PTRS-DMRS related field) may be defined by a fixed value (for example, x).

In other words, the certain field of DCI may be defined by the fixed value x regardless of the maximum rank for the single TRP (maxRank)/maximum rank for the SDM (for example, maxRankSdm). x may be, for example, 0, 1, or 2.

When the multi-panel scheme is configured as the SDM scheme, the UE may perform reception processing of DCI by expecting/assuming that the certain field of the DCI takes a fixed value regardless of the maximum rank for the single TRP/maximum rank for the SDM. Alternatively, the UE may judge that the certain field takes the fixed value x when the multi-panel scheme is configured as the SDM scheme, and the SDM scheme is indicated by DCI (for example, when the SRS resource set indicator field takes a certain value).

### {Option 1-4}

When the multi-panel scheme (for example, multipanelScheme) is configured as the SDM scheme (for example, sdmSchem), the number of bits of a certain field may be determined based on a maximum rank for the SDM (for example, maxRankSdm).

For example, when the maximum rank for the SDM (for example, maxRankSdm) is 1, the number of bits of the certain field may be zero. The certain field of the DCI may be determined in consideration of only the maximum rank for the SDM (for example, maxRankSdm) (for example, without considering the maximum rank for the single TRP).

### <Second Embodiment>

A second embodiment relates to an example of UL transmission control (for example, determination of the number of bits of a DCI field or the like) of a case where a multi-panel scheme is configured as an SFN scheme (for example, sfnSchem).

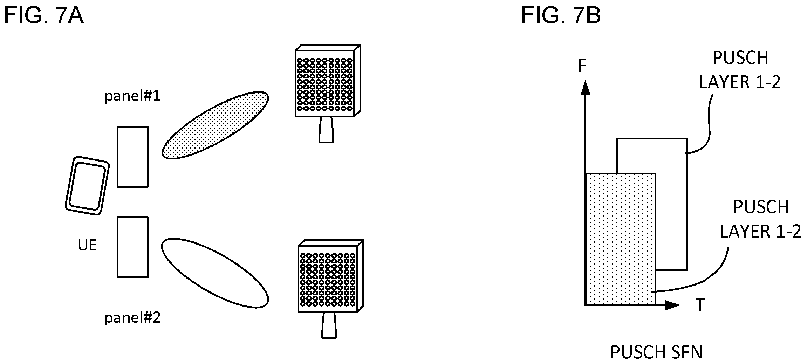

When the multi-panel scheme (for example, multipanelScheme) is configured as the SFN scheme (for example, sfnSchem) (see FIG. 7A and FIG. 7B), the number of bits of a certain field included in DCI may be determined based on at least one of option 2-0 to option 2-4 below. The certain field may be a PTRS-DMRS related field. In the present disclosure, the number of bits may be interpreted as a size, a bit size, or a bit width.

FIG. 7A and FIG. 7B show an example of a single-DCI based PUSCH SFN scheme. Here, PUSCHs to be transmitted in a single-frequency network (SFN) based manner may be scheduled based on one DCI.

In the following description, a case where a certain field (for example, a PTRS-DMRS related field) of DCI is of 0 or 2 bits will be described as an example, but this is not restrictive. 2 bits may be another value (for example, X bits). In the present disclosure, a PTRS-DMRS related field will be described as an example of the certain field of the DCI, but an applicable field is not limited thereto. This may be applied to a DCI field in which the number of bits is variable, based on information related to a maximum rank.

### {Option 2-0}

When the multi-panel scheme (for example, multipanelScheme) is configured as the SFN scheme (for example, sfnSchem), the number of bits of the certain field may be determined based on a maximum rank (for example, maxRank) for another transmission/scheme (for example, the single TRP).

For example, when the maximum rank for the single TRP is 1, the number of bits of the certain field may be zero. The certain field of the DCI may be determined in consideration of only the maximum rank for the single TRP (for example, without considering the maximum rank for the SFN).

The maximum rank for the SFN scheme (for example, maxRankSfn) may be determined/judged based on the maximum rank for a single TRP (for example, maxRank). For example, the UE may expect/assume that, when the maximum rank for the single TRP is 1, the maximum rank for the SFN scheme (for example, maxRankSfn) is also 1.

The UE may expect/assume that the maximum rank for the single TRP is always greater than or equal to the maximum rank for the SFN (or the same as the maximum rank for SFN or greater than the maximum rank for the SFN).

When the maximum rank for the single TRP (for example, maxRank) is greater than 1, the certain field may be determined to be of 2 bits. Note that, even when the maximum rank for the single TRP (for example, maxRank) is greater than 1, the certain field may be determined to be of 0 bits when another condition is satisfied. The other condition may be a case where a PTRS configuration (for example, PTRS-UplinkConfig) is not configured in a certain PUSCH matching type (for example, dmrs-UplinkForPUSCH-MappingTypeA or dmrs-UplinkForPUSCH-MappingTypeB) and the transform precoder is disabled or a case where the ransform precoder is enabled (for example, enabled).

When the multi-panel scheme is configured as the SFN scheme, and the other condition is satisfied or the maximum rank for the single TRP is 1, the UE may judge that the number of bits of the certain field is zero.

As described above, by determining the number of bits of the certain field of DCI in a first transmission scheme (for example, the single TRP) and the number of bits of the certain field of DCI in a second transmission scheme (for example, the SFN scheme), based on the maximum rank for the first transmission scheme, it is possible to simplify determination of the number of bits of the certain field.

### {Option 2-1}

When the multi-panel scheme (for example, multipanelScheme) is configured as the SFN scheme (for example, sfnSchem), the number of bits of the certain field may be determined based on the maximum rank for each of a plurality of transmissions/schemes. Examples of the maximum rank corresponding to each of the plurality of transmissions/schemes may include a maximum rank for the single TRP (for example, maxRank) and a maximum rank for the SFN scheme (for example, maxRankSfn).

For example, when the maximum rank for the single TRP (for example, maxRank) is 1, and the maximum rank for the SFN scheme (for example, maxRankSfn) is 1, the number of bits of the certain field may be zero. In other words, when max{maxRank, maxRankSfn} = 1, the certain field may be 0 bits.

When either the maximum rank for the single TRP (for example, maxRank) or the maximum rank for the SFN scheme (for example, maxRankSfn) is greater than 1, the certain field may be determined to be of 2 bits.

Note that even when either the maximum rank for the single TRP (for example, maxRank) or the maximum rank for the SFN scheme (for example, maxRankSfn) is greater than 1, the certain field may be determined to be of 0 bits when another condition is satisfied. The other condition may be a case where a PTRS configuration (for example, PTRS-UplinkConfig) is not configured in a certain PUSCH matching type (for example, dmrs-UplinkForPUSCH-MappingTypeA or dmrs-UplinkForPUSCH-MappingTypeB) and the transform precoder is disabled or a case where the ransform precoder is enabled (for example, enabled).

When the multi-panel scheme is configured as the SFN scheme, and the other condition is satisfied or both the maximum rank for the single TRP (for example, maxRank) and the maximum rank for the SFN scheme (for example, maxRankSfn) are 1, the UE may judge that the number of bits of the certain field is zero.

Option 2-0/2-1 may be applied in a case where dynamic switching between the single TRP and the SFN is supported/configured. When dynamic switching between the single TRP and the SFN is not supported/configured, a network (for example, a base station) may control a PTRS-DMRS related field (for example, the number of bits or the like) by using one higher layer parameter (for example, maxRank or maxRankSfn).

When the multi-panel scheme is configured as the SFN scheme, and the dynamic switching between the single TRP and the SFN is not supported/configured, the PTRS-DMRS related field may be determined/judged to be 0 bits if maxRankSfn = 1. When an SRS resource set indicator field is not present, the UE may judge that dynamic switching between the single TRP and the SFN is not supported/configured.

Alternatively, when the multi-panel scheme is configured as the SFN scheme and the dynamic switching between the single TRP and the SFN is not supported/configured, the PTRS-DMRS related field may be determined/judged to be 0 bits if maxRank = 1. In this case, the maximum rank of the SFN (maxRankSfn) may be provided by a higher layer parameter related to the maximum rank of single-TRP transmission (maxRank).

When the maximum rank for the single TRP is 1, and the maximum rank for the SFN scheme is greater than 1 (maxRank = 1 and maxRankSdm > 1), the transmission/scheme to be applied may be determined by the SRS resource set indicator field. When the SRS resource set indicator field takes a given value (for example, "00" or "01"), this means single-TRP transmission, and the PTRS-DMRS related field may be used as a reserved bit or ignored by the UE.

When the maximum rank for the single TRP is greater than 1, and the maximum rank for the SFN scheme is 1 (maxRank > 1 and maxRankSfn = 1), the transmission/scheme to be applied may be determined by the SRS resource set indicator field. When the SRS resource set indicator field takes a given value (for example, "10" or "11"), this means SFN transmission, and the PTRS-DMRS related field may be used as a reserved bit or ignored by the UE.

As in option 2-1, by determining the number of bits of the certain field of the DCI in consideration of both the maximum rank for a first transmission scheme (for example, the single TRP) and the maximum rank for a second transmission scheme (for example, the SFN scheme), it is possible to appropriately determine the number of bits of the certain field even when configuration of a plurality of higher layer parameters related to maximum rank is supported. Even in a case where dynamic switching between the first transmission scheme and the second transmission scheme is supported, it is possible to appropriately determine the number of bits of the certain field.

### {Option 2-2}

The number of bits of a certain field may be determined based on information indicated by DCI and the maximum rank for each transmission/scheme.

The information indicated by DCI may be information indicating either single-TRP transmission or SFN transmission. The information indicated by DCI may be indicated by using an SRS resource set indicator field of the DCI.

The UE may judge the number of bits of a certain field (for example, a PTRS-DMRS related field) based on information indicated by the DCI (for example, an indicated transmission/scheme) and the maximum rank for the transmission/scheme.

When a first value (for example, "00" or "01") is indicated by the SRS resource set indicator field, the number of bits of the certain field may be determined based on the maximum rank for the single TRP. When the first value is indicated by the SRS resource set indicator field, this may mean application of single-TRP transmission.

When the first value is indicated by the SRS resource set indicator field, and the maximum rank for the single TRP (for example, maxRank) is 1, the UE may judge that the certain field is of 0 bits. When the SRS resource set indicator field indicates the first value, and the maximum rank for the single TRP (for example, maxRank) is greater than 1, the UE may judge that the certain field is of 2 bits.

When a second value (for example, "10" (or "11")) is indicated by the SRS resource set indicator field, the number of bits of the certain field may be determined based on the maximum rank for the SFN. When the second value is indicated by the SRS resource set indicator field, this may mean application of SFN transmission.

When the second value is indicated by the SRS resource set indicator field, and the maximum rank for the SFN (for example, maxRankSfn) is 1, the UE may judge that the certain field is of 0 bits. When the SRS resource set indicator field indicates the second value, and the maximum rank for the SFN (for example, maxRankSfn) is greater than 1, the UE may judge that the certain field is of 2 bits.

In option 2-2, the size of the certain field (for example, the PTRS-DMRS related field) may be changed depending on the SRS resource set indicator field. The total DCI size is determined based on the maximum sizes of the PTRS-DMRS related field in different cases, and the total DCI size may be adjusted by zero padding.

As described above, by considering another field (for example, the SRS resource set indicator field of DCI) indicating a transmission scheme and the maximum rank for a corresponding transmission scheme (for example, the maximum rank for a first transmission scheme (for example, the single TRP) or the maximum rank for a second transmission scheme (for example, the SFN scheme)), it is possible to flexibly control the number of bits of the certain field according to the transmission scheme.

### {Option 2-3}

When the multi-panel scheme (for example, multipanelScheme) is configured as the SFN scheme (for example, sfnSchem), the number of bits of a certain field (for example, a PTRS-DMRS related field) may be defined by a fixed value (for example, x).

In other words, the certain field of DCI may be defined by the fixed value x regardless of the maximum rank for the single TRP (maxRank)/maximum rank for the SFN (for example, maxRankSfn). x may be, for example, 0, 1, or 2.

When the multi-panel scheme is configured as the SFN scheme, the UE may perform reception processing of DCI by expecting/assuming that the certain field of the DCI takes a fixed value regardless of the maximum rank for the single TRP/maximum rank for the SFN. Alternatively, the UE may judge that the certain field is the fixed value x when the multi-panel scheme is configured as the SFN scheme, and the SFN scheme is indicated by DCI (for example, when the SRS resource set indicator field takes a certain value).

### {Option 2-4}

When the multi-panel scheme (for example, multipanelScheme) is configured as the SFN scheme (for example, sfnSchem), the number of bits of a certain field may be determined based on a maximum rank for the SFN (for example, maxRankSfn).

For example, when the maximum rank for the SFN (for example, maxRankSfn) is 1, the number of bits of the certain field may be zero. The certain field of the DCI may be determined in consideration of only the maximum rank for the SFN (for example, maxRankSfn) (for example, without considering the maximum rank for the single TRP).

### <Third Embodiment>

A third embodiment relates to an example of configuration of PTRS ports (for example, the maximum number of PTRS ports) for a multi-DCI based STxMP (for example, PUSCH + PUSCH) scheme.

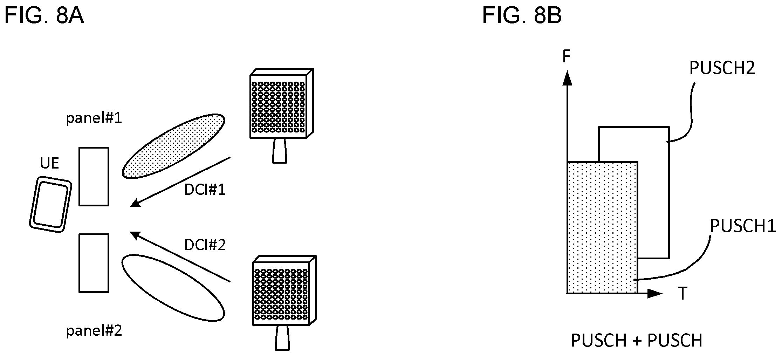

A UE may support STxMP in multi-DCI based multi-TRP (see FIG. 8A and FIG. 8B). In this case, the UE may be provided with no CORESET pool index or a CORESET pool index of a first value (for example, 0) for one or more first CORESETs, and may be provided with a CORESET pool index of a second value (for example, 1) for one or more second CORESETs, by a network (for example, a base station).

FIG. 8A and FIG. 8B show an example of multi-DCI based STxMP (for example, PUSCH + PUSCH). Here, shown is a case where two pieces of DCI (for example, DCI #1 and DCI #2) are transmitted by using CORESETs corresponding to different CORESET pool indices. A plurality of PUSCHs (for example, PUSCH #1 and PUSCH #2) overlapping in the time domain may be scheduled by respective pieces of DCI (for example, DCI #1 and DCI #2).

The UE may control the maximum number of PTRS ports corresponding to each UL transmission (for example, PUSCH + PUSCH), based on the maximum number of PTRS ports in multi-DCI based multi-TRP STxMP (M-DCI M-TRP STxMP).

The maximum number of PTRS ports (maxNrofPorts) in the multi-DCI based multi-TRP STxMP may be configured by a higher layer parameter, defined in a specification, or determined based on UE capability information. For example, in the multi-DCI based multi-TRP STxMP (M-DCI M-TRP STxMP), the maximum number of PTRS ports may be determined based on at least one of option 3-1 to option 3-3 below.

### {Option 3-1}

The maximum number of PTRS ports (maxNrofPorts) may be configured as any value (for example, 1 or 2). In other words, the maximum number of PTRS ports in multi-DCI based multi-TRP STxMP (M-DCI M-TRP STxMP) may be supported without limitation to the maximum number (1 or 2) of PTRS ports that can be configured in another transmission/scheme (for example, single-TRP transmission).

With this, it is possible to flexibly configure PTRS ports in multi-DCI based multi-TRP STxMP (M-DCI M-TRP STxMP).

In this case, a higher layer parameter (maxNrofPorts) related to the maximum number of PTRS ports configured for another transmission/scheme may be applied to multi-multi-DCI based multi-TRP STxMP (M-DCI M-TRP STxMP).

### {Option 3-2}

A specific value may be configured for the maximum number of PTRS ports (maxNrofPorts). The specific value may be, for example, 1. The UE may expect/assume that the maximum number of PTRS ports is one in multi-DCI based multi-TRP STxMP (M-DCI M-TRP STxMP).

In this case, notification of the information (for example, a higher layer parameter) related to the maximum number of PTRS ports for multi-DCI based multi-TRP STxMP (M-DCI M-TRP STxMP) may be unnecessary.

### {Option 3-3}

The UE may expect/assume that the maximum number of PTRS ports is one in multi-DCI based multi-TRP STxMP (M-DCI M-TRP STxMP) regardless of configuration of the maximum number of PTRS ports (maxNrofPorts).

Even in a case where a higher layer parameter (for example, maxNrofPorts) related to the maximum number of PTRS ports is configured, the UE may judge that the maximum number of PTRS ports in the M-DCI M-TRP STxMP is one, regardless of the configuration of maxNrofPorts. The higher layer parameter related to the maximum number of PTRS ports (for example, maxNrofPorts) may be applied to another transmission/scheme (for example, single-TRP transmission).

In option 3-2/option 3-3, up to one PTRS port is associated with one panel/CORESET pool index/SRS resource set, and up to two PTRS ports in total may be transmitted in STxMP. In option 3-1, when the maximum number of PTRS ports is configured at two, up to four PTRS ports in total may be transmitted in STxMP.

### {Variations}

In order to indicate the maximum number of PTRS ports for multi-DCI based STxMP, an RRC parameter (for example, maxNrofPortMDCI) different from the RRC parameter related to the maximum number of existing PTRS ports may be introduced/supported. The RRC parameter (for example, maxNrofPortMDCI) may be applied to multi-DCI based STxMP, and an RRC parameter related to the maximum number of existing PTRS ports (for example, maxNrofPort) may be applied to another transmission/scheme (for example, a single-TRP PUSCH).

In the present disclosure, the multi-DCI based STxMP transmission/scheme may include at least one of case 3-1 to case 3-3 below.

### <<Case 3-1>>

Two dynamic grant PUSCHs scheduled by different CORESET pool indices (or two dynamic grant PUSCHs associated with different SRS resource sets) overlap in the time domain.

### <<Case 3-2>>

Two configured grant PUSCHs scheduled or activated by different CORESET pool indices (or two configured grant PUSCHs associated with different SRS resource sets) overlap in the time domain.

### <<Case 3-3>>

One dynamic grant PUSCH and one configured grant PUSCH scheduled or activated by different CORESET pool indices (or one dynamic grant PUSCH and one configured grant PUSCH associated with different SRS resource sets) overlap in the time domain.

### <Fourth Embodiment>

A fourth embodiment relates to an example of UL transmission control (for example, determination of the number of bits of a DCI field or the like) in multi-DCI based STxMP. The fourth embodiment may be applied in combination with the first embodiment/second embodiment/third embodiment.

### {Analysis}

In a case where multi-DCI based STxMP UL transmission (for example, PUSCH + PUSCH) is supported (see FIG. 8A and FIG. 8B), a maximum rank is configured for multi-DCI based STxMP UL transmission. In this case, it is also assumed that a higher layer parameter related to the maximum rank (maxRank) of an existing system (for example, Rel. 17 or earlier versions) is reused for multi-DCI based STxMP UL transmission. The higher layer parameter for the maximum rank (maxRank) of the existing system is selected from 1, 2, 3, and 4 (maxRank = {1, 2, 3, 4}).

In contrast, it is also assumed that the value range of the maximum rank for the multi-DCI based STxMP (for example, the value range of maxRank for mDCI STxMP) is {1, 2}. In other words, the maximum rank in the range of {1, 2} is applied to UL transmissions (for example, PUSCH + PUSCH) overlapping in the time domain. Note that it is also conceivable that the maximum rank in the range of {1, 2} is not applied/supported for UL transmissions (for example, single-TRP PUSCHs) not overlapping in the time domain. In a case of supporting the multi-TCI based STxMP, it is considered to be necessary for a base station to configure the maximum rank = {1, 2} regardless of a single-DCI based STxMP or single-TRP case.

Hence, for the multi-DCI based STxMP, a higher layer parameter for indicating a maximum rank (for example, maxRankMDCI) (for example, the maximum rank = {1, 2}) may be introduced/supported. A higher layer parameter for the maximum rank for multi-DCI based STxMP (for example, maxRankMDCI) may be configured separately from another transmission/scheme (for example, single-TRP transmission).

A higher layer parameter for the maximum rank for the multi-DCI based STxMP (for example, maxRankMDCI = {1, 2}) may be applied to the multi-TCI based STxMP (for example, PUSCH + PUSCH), and a higher layer parameter for a maximum rank (for example, maxRank = {1, 2, 3, 4}) supported in an existing system may be applied to another transmission/scheme (for example, a single-TRP PUSCH).

In a case of applying multi-DCI based STxMP, a UE may be provided with no CORESET pool index or a CORESET pool index of a first value (for example, 0) for one or more first CORESETs, and may be provided with a CORESET pool index of a second value (for example, 1) for one or more second CORESETs. The multi-DCI based STxMP transmission/scheme may include at least one of case 3-1 to case 3-3 described in the third embodiment above.

In the present disclosure, when at least one of case 3-1 to case 3-3 is scheduled/configured, this may mean that multi-DCI based STxMP is applied/configured. Alternatively, when a plurality of CORESET pool indices are configured, this may mean that multi-DCI based STxMP is configured.

In a case where a configuration that a plurality of higher layer parameters related to the maximum rank (for example, maxRank = {1, 2, 3, 4}/maxRankMDCI = {1, 2}) are configured separately is supported, the number of bits of a certain field included in DCI may be determined based on at least one of option 4-0 to option 4-4 below. The certain field may be a PTRS-DMRS related field.

In the following description, a case where a certain field (for example, a PTRS-DMRS related field) of DCI is of 0 or 2 bits will be described as an example, but this is not restrictive. 2 bits may be another value (for example, X bits). In the present disclosure, a PTRS-DMRS related field will be described as an example of the certain field of DCI, but an applicable field is not limited thereto. The applicable field may be a DCI field in which the number of bits is variable, based on information related to a maximum rank.

### {Option 4-0}

When multi-DCI based STxMP is applied/configured, the number of bits of the certain field of the DCI may be determined based on a maximum rank (for example, maxRank) for another transmission/scheme (for example, the single TRP).

For example, when the maximum rank for the single TRP is 1, the number of bits of the certain field may be zero. The certain field of the DCI may be determined in consideration of only the maximum rank for the single TRP (for example, without considering the maximum rank for the multi-DCI STxMP).

The maximum rank for the multi-DCI based STxMP scheme (for example, maxRankMDCI) may be determined/judged based on the maximum rank for the single TRP (for example, maxRank). For example, the UE may expect/assume that, when the maximum rank for the single TRP is 1, the maximum rank for the multi-DCI based STxMP (for example, maxRankMDCI) is also 1.

The UE may expect/assume that the maximum rank for the single TRP is always greater than or equal to the maximum rank for multi-DCI based STxMP (or the same as the maximum rank for the multi-DCI based STxMP or greater than the maximum rank for the multi-DCI based STxMP).

When the maximum rank for the single TRP (for example, maxRank) is greater than 1, the certain field may be determined to be of 2 bits. Note that, even when the maximum rank for the single TRP (for example, maxRank) is greater than 1, the certain field may be determined to be of 0 bits when another condition is satisfied. The other condition may be a case where a PTRS configuration (for example, PTRS-UplinkConfig) is not configured in a certain PUSCH matching type (for example, dmrs-UplinkForPUSCH-MappingTypeA or dmrs-UplinkForPUSCH-MappingTypeB) and the transform precoder is disabled or a case where the ransform precoder is enabled (for example, enabled).

When the multi-DCI based STxMP is applied/configured, and the other condition is satisfied or the maximum rank for the single TRP is 1, the UE may judge that the number of bits of the certain field is zero.

### {Option 4-1}

When the multi-DCI based STxMP is applied/configured, the number of bits of the certain field may be determined based on the maximum rank for each of a plurality of transmissions/schemes. Examples of the maximum rank corresponding to each of the plurality of transmissions/schemes may include a maximum rank for the single TRP (for example, maxRank) and a maximum rank for the multi-DCI based STxMP (for example, maxRankMDCI).

For example, when the maximum rank for the single TRP (for example, maxRank) is 1, and the maximum rank for the multi-DCI based STxMP (for example, maxRankMDCI) is 1, the number of bits of the certain field may be zero. In other words, when max{maxRank, maxRankMDCI} = 1, the certain field may be 0 bits.

When either the maximum rank for the single TRP (for example, maxRank) or the maximum rank for the multi-DCI based STxMP (for example, maxRankMDCI) is greater than 1, the certain field may be determined to be of 2 bits.

Note that, even when either the maximum rank for the single TRP (for example, maxRank) or the maximum rank for the multi-DCI based STxMP (for example, maxRankMDCI) is greater than 1, the certain field may be determined to be of 0 bits when another condition is satisfied. The other condition may be a case where a PTRS configuration (for example, PTRS-UplinkConfig) is not configured in a certain PUSCH matching type (for example, dmrs-UplinkForPUSCH-MappingTypeA or dmrs-UplinkForPUSCH-MappingTypeB) and the transform precoder is disabled or a case where the ransform precoder is enabled (for example, enabled).

When the multi-DCI based STxMP is applied/configured, and the other condition is satisfied or both the maximum rank for the single TRP (for example, maxRank) and the maximum rank for the multi-DCI based STxMP (for example, maxRankMDCI) are 1, the UE may judge that the number of bits of the certain field is 0.

When the maximum rank for the single TRP is 1, and the maximum rank for the multi-DCI based STxMP is greater than 1 (maxRank = 1 and maxRankMDCI > 1), the certain field may be used as a reserved bit or ignored by the UE for the single TRP.

When the maximum rank for the single TRP is greater than 1, and the maximum rank for the multi-DCI based STxMP is 1 (maxRank > 1 and maxRankMDCI = 1), the certain field may be used as a reserved bit or ignored by the UE for the multi-DCI based STxMP.

### {Option 4-2}

The number of bits of the certain field may be determined based on the transmission/scheme to be applied and the maximum rank for the transmission/scheme to be applied.

The UE may judge the number of bits of the certain field (for example, a PTRS-DMRS related field) based on the scheme of scheduled UL transmission (for example, whether the scheme is single-TRP transmission/multi-DCI based STxMP) and the maximum rank for the scheme of the UL transmission.

When a single TRP is scheduled/applied, the number of bits of the certain field may be determined based on a maximum rank for the single TRP for a single-TRP case. When the maximum rank for the single TRP (for example, maxRank) is 1, the UE may judge that the certain field is of 0 bits. When the maximum rank for the single TRP (for example, maxRank) is greater than 1, the UE may judge that the certain field is of 2 bits.

When multi-DCI based STxMP is scheduled/applied, the number of bits of the certain field may be determined based on the maximum rank for the multi-DCI based STxMP for a multi-DCI based STxMP case. When the maximum rank for the multi-DCI based STxMP (for example, maxRankMDCI) is 1, the UE may judge that the certain field is of 0 bits. When the maximum rank for the multi-DCI based STxMP (for example, maxRankMDCI) is greater than 1, the UE may judge that the certain field is of 2 bits.

In option 4-2, the size of the certain field (for example, a PTRS-DMRS related field) may be changed depending on whether the single TRP or the multi-DCI based STxMP is applied. The total DCI size is determined based on the maximum sizes of the PTRS-DMRS related field in different cases, and the total DCI size may be adjusted by zero padding.

### {Option 4-3}

When the multi-DCI based STxMP is configured, the number of bits of a certain field (for example, a PTRS-DMRS related field) may be defined by a fixed value (for example, x).

In other words, the certain field of DCI may be defined by the fixed value x regardless of the maximum rank for the single TRP (maxRank)/maximum rank for the multi-DCI based STxMP (for example, maxRankSfn). x may be, for example, 0, 1, or 2.

When the multi-DCI based STxMP is configured, the UE may perform reception processing of DCI by expecting/assuming that the certain field of the DCI takes a fixed value, regardless of the maximum rank for the single TRP/maximum rank for the multi-DCI based STxMP. Alternatively, when the multi-DCI based STxMP is configured, and the multi-DCI based STxMP is scheduled (for example, when the PUSCHs corresponding to different CORESET pool indices are scheduled to overlap in the time domain), the UE may judge that the certain field takes the fixed value x.

### {Option 4-4}

In a case where the multi-DCI based STxMP is configured, the number of bits of the certain field may be determined based on the maximum rank (for example, maxRankMDCI) for the multi-DCI based STxMP.

For example, when the maximum rank for the multi-DCI based STxMP (for example, maxRankMDCI) is 1, the number of bits of the certain field may be zero. The certain field of the DCI may be determined in consideration of only the maximum rank for the multi-DCI based STxMP (for example, maxRankSfn) (for example, without considering the maximum rank for the single TRP).

The fourth embodiment may be applied only to an ideal-backhaul case.

In a non-ideal-backhaul case, when the maximum rank for the STxMP (for example, maxRankMDCI) is 1, the PTRS-DMRS related field may be of 0 bits. Alternatively, when the maximum rank (for example, maxRank) is 1, the PTRS-DMRS related field may be of 0 bits. In this case, the maximum rank for the multi-DCI based STxMP may be provided by a higher layer parameter for the maximum rank (for example, maxRank) supported in an existing system.

Ideal-backhaul may indicate that joint HARQ-ACK feedback is configured. Non-ideal-backhaul may indicate that separate HARQ-ACK feedback is configured.

### {Variations}

For the multi-DCI based STxMP (for example, PUSCH + PUSCH), the maximum number of layers (or the maximum rank number) of each PUSCH of a PUSCH + PUSCH overlapping in the time domain may be one or two depending on UE capability.

### <<Option 4-A>>

When multi-DCI based multi-TRP (PUSCH + PUSCH) is configured, a UE need not expect/assume that a maximum rank number greater than 2 (for example, maxRank > 2) is configured. This may mean that, even when the UE is scheduled with a single-TRP PUSCH, the maximum number of layers for the single-TRP PUSCH is restricted to two.

### <<Option 4-B>>

Alternatively, when multi-DCI based multi-TRP (PUSCH + PUSCH) is configured, the restriction indicated in option 4-A need not be imposed. When the number of layers of each of PUSCH #1 and PUSCH #2 in multi-DCI based PUSCH transmission (for example, PUSCH + PUSCH) is greater than two (or when maxRank > 2 is configured for the UE), the UE need not expect/assume that PUSCH #1 and PUSCH #2 are scheduled in the same time domain.

If PUSCH #1 and PUSCH #2 overlapping in the time domain are scheduled, the UE may drop one of the PUSCHs. The PUSCH to be dropped (or which PUSCH to be dropped) may be determined based on a certain condition/rule. The certain condition/rule may be at least one of a priority index of each PUSCH, whether each PUSCH is dynamic grant or configured grant, the start/end time of each PUSCH, and a corresponding CORESET pool index/SRS resource set.

When the number of layers of each of PUSCH #1 and PUSCH #2 in multi-DCI based PUSCH transmission (for example, PUSCH + PUSCH) is two or less (or when maxRank ≤ 2 is configured for the UE), PUSCH #1 and PUSCH #2 may be scheduled in the same time domain or different time domains.

Note that, in a case where the maximum rank for the multi-DCI based STxMP (for example, maxRankMDCI) is supported, maxRank in option 4-A/4-B may be replaced with maxRankMDCI.

### <Supplements>

### {Notification of Information to UE}

Notification of any information to a UE (from a network (NW) (for example, a base station (BS))) (in other words, reception of any information from the BS in the UE) in the above-described embodiments may be performed by using physical layer signaling (for example, DCI), higher layer signaling (for example, RRC signaling, MAC CE), a specific signal/channel (for example, a PDCCH, a PDSCH, a reference signal), or a combination of these.

When the notification is performed by a MAC CE, the MAC CE may be identified by a new logical channel ID (LCID) not defined in an existing standard being included in a MAC subheader.

When the notification is performed by DCI, the notification may be performed by a specific field of the DCI, a radio network temporary identifier (RNTI) used for scrambling of cyclic redundancy check (CRC) bits given to the DCI, a format of the DCI, or the like.

Notification of any information to a UE in the above-described embodiments may be performed periodically, semi-persistently, or aperiodically.

### {Notification of Information from UE}

Notification of any information from a UE (to an NW) (in other words, transmission/reporting of any information to the BS from the UE) in the above-described embodiments may be performed by using physical layer signaling (for example, UCI), higher layer signaling (for example, RRC signaling, MAC CE), a specific signal/channel (for example, a PUCCH, a PUSCH, a PRACH, a reference signal), or a combination of these.

When the notification is performed by a MAC CE, the MAC CE may be identified by a new LCID not defined in existing standards being included in a MAC subheader.

When the notification is performed by UCI, the notification may be transmitted by using a PUCCH or a PUSCH.

Notification of any information from a UE in the above-described embodiments may be performed periodically, semi-persistently, or aperiodically.

### {Regarding Application of Each Embodiment}

At least one of the above-described embodiments may be applied to a case satisfying a specific condition. The specific condition may be defined in a standard, or a UE/BS may be notified of the specific condition by using higher layer signaling/physical layer signaling.

At least one of the above-described embodiments may be applied only to a UE that has reported a specific UE capability or that supports the specific UE capability.

The specific UE capability may indicate at least one of the following:
- supporting of specific processing/operation/control/information (for example, STxMP) for at least one of the above embodiments
- supporting of STxMP SDM
- supporting of STxMP SFN
- supporting of multi-DCI based STxMP (for example, PUSCH + PUSCH)
- supporting of dynamic switching between STxMP SDM and single TRP
- supporting of dynamic switching between STxMP SFN and single TRP.

The specific UE capability may be capability applied over all the frequencies (commonly irrespective of frequency), capability per frequency (for example, one or a combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

At least one of the above-described embodiments may be applied when the UE is configured/activated/triggered with specific information related to the above-described embodiment (or performance of the operation of the above-described embodiment) by higher layer signaling/physical layer signaling. For example, the specific information may be information indicating that dynamic switching of each scheme/transmission scheme of STxMP is enabled, any RRC parameter for a specific release (for example, Rel. 18/19), or the like.

When the UE does not support at least one of the specific UE capabilities above or is not configured with the specific information, operation of Rel. 15/16 may be applied, for example.

### (Supplementary Notes)

Regarding one embodiment of the present disclosure, the following supplementary notes of the invention will be given.

### {Supplementary Note 1-1}

A terminal including: a receiving section that receives at least one of first information related to a maximum rank for a first transmission scheme and second information related to a maximum rank for a second transmission scheme, and downlink control information having a field used to indicate association between a phase tracking reference signal (PTRS) and a demodulation reference signal (DMRS); and a control section that judges the number of bits of the field, based on at least one of the first information and the second information when the second transmission scheme is configured.

### {Supplementary Note 1-2}

The terminal according to supplementary note 1-1, wherein the first transmission scheme is single-transmission/reception point transmission while the second transmission scheme is a space division multiplexing scheme in a multi-panel scheme or a single-frequency network scheme, and the control section judges the number of bits of the field of a case where the second transmission scheme is applied, based on the first information.

### {Supplementary Note 1-3}

The terminal according to supplementary note 1-1 or 1-2, wherein the first transmission scheme is single-transmission/reception point transmission while the second transmission scheme is a space division multiplexing scheme in a multi-panel scheme or a single-frequency network scheme, and the control section judges the number of bits of the field of a case where the second transmission scheme is applied based on both the first information and the second information.

### {Supplementary Note 1-4}

The terminal according to any one of supplementary notes 1-1 to 1-3, wherein the first transmission scheme is single-transmission/reception point transmission while the second transmission scheme is a space division multiplexing scheme in a multi-panel scheme or a single-frequency network scheme, and the control section judges the number of bits of the field of a case where the second transmission scheme is applied, based on at least one of the first information and the second information, and another field of the downlink control information.

### {Supplementary Note 2-1}

A terminal including: a receiving section that receives first downlink control information transmitted by using a first control resource set corresponding to a first control resource set pool index and second downlink control information transmitted by using a second control resource set corresponding to a second control resource set pool index; and a control section that performs control to transmit a first uplink shared channel scheduled by the first downlink control information and a second uplink shared channel scheduled by the second downlink control information and overlapping the first uplink shared channel in a time domain, wherein the control section judges a maximum number of phase tracking reference signal (PTRS) ports corresponding to the first uplink shared channel and a maximum number of PTRS ports corresponding to the second uplink shared channel, based on information notified by higher layer signaling or a predefined value.

### {Supplementary Note 2-2}

The terminal according to supplementary note 2-1, wherein the reception section receives first information related to a maximum rank for a first transmission scheme for transmitting the first uplink shared channel and the second uplink shared channel overlapping in the time domain and second information related to a maximum rank for a second transmission scheme different from the first transmission scheme.

### {Supplementary Note 2-3}

The terminal according to supplementary note 2-1 or 2-2, wherein, when the first transmission scheme is applied, the control section judges at least one of the number of bits of a field included in the first downlink control information and the number of bits of a field included in the second downlink control information, based on at least one of the first information and the second information.

### {Supplementary Note 2-4}

The terminal according to any one of supplementary notes 2-1 to 2-3, wherein the second transmission scheme is single-transmission/reception point transmission, and the control section judges at least one of the number of bits of a field included in the first downlink control information and the number of bits of a field included in the second downlink control information, based on the second information.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

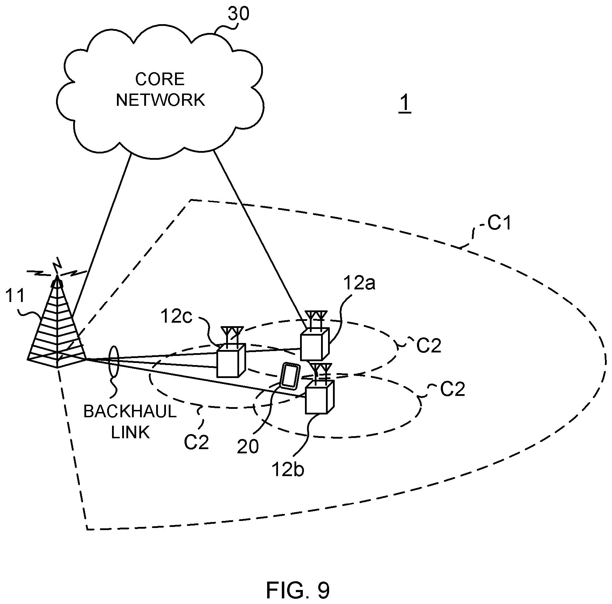

FIG. 9 is a diagram to show an example of a schematic structure of the radio communication system according to one embodiment. A radio communication system 1 (which may be simply referred to as a system 1) may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NF), such as a User Plane Function (UPF), an Access and Mobility management Function (AMF), a Session Management Function (SMF), Unified Data Management (UDM), an Application Function (AF), a Data Network (DN), a Location Management Function (LMF), and operation, administration, and maintenance (Management) (OAM), for example. Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data," and the PUSCH may be interpreted as "UL data."

For detection of the PDCCH, a control resource set (CORESET) and a search space may be used. The CORESET takes a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

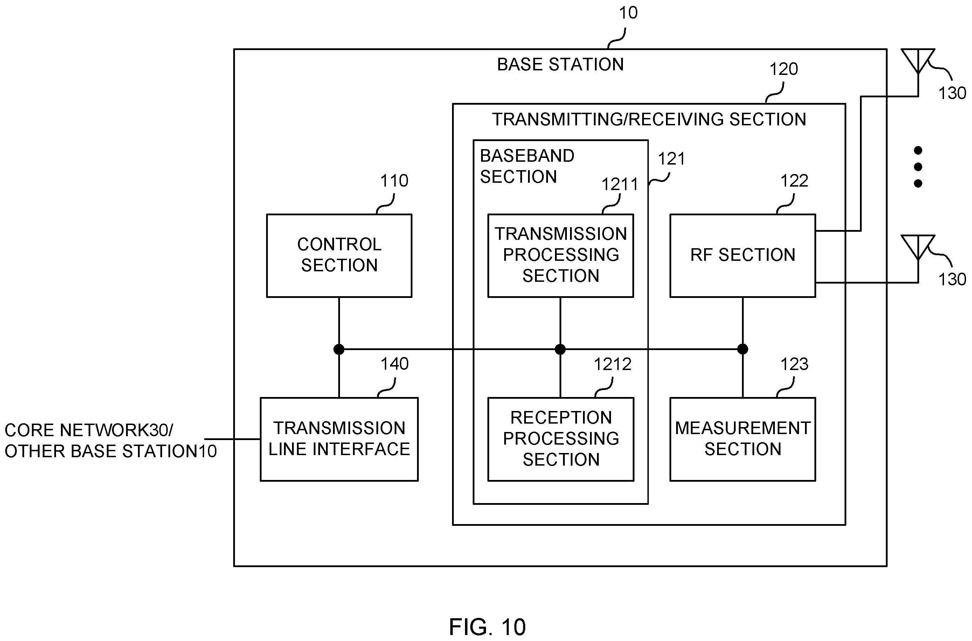

FIG. 10 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 (for example, a network node providing NF) or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit at least one of first information related to a maximum rank for a first transmission scheme and second information related to a maximum rank for a second transmission scheme, and downlink control information having a field used to indicate association between a phase tracking reference signal (PTRS) and a demodulation reference signal (DMRS). The control section 110 may control the number of bits of the field, based on at least one of the first information and the second information when the second transmission scheme is configured.

The transmitting/receiving section 120 may transmit first downlink control information transmitted by using a first control resource set corresponding to a first control resource set pool index and second downlink control information transmitted by using a second control resource set corresponding to a second control resource set pool index. The control section 110 may perform control to schedule a first uplink shared channel by the first downlink control information and schedule a second uplink shared channel overlapping the first uplink shared channel in the time domain by the second downlink control information. The control section 110 may judge a maximum number of phase tracking reference signal (PTRS) ports corresponding to the first uplink shared channel and a maximum number of PTRS ports corresponding to the second uplink shared channel, based on information notified by higher layer signaling or a predefined value.

### (User Terminal)

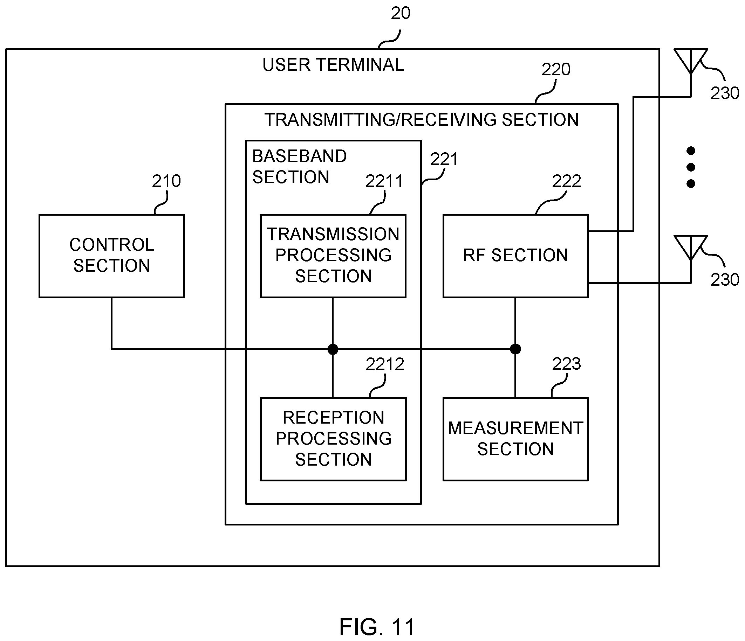

FIG. 11 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the measurement section 223 may derive channel measurement for CSI calculation, based on a resource for channel measurement. The resource for channel measurement may be, for example, a non zero power (NZP) CSI-RS resource. The measurement section 223 may derive interference measurement for CSI calculation, based on a resource for interference measurement. The resource for interference measurement may be at least one of an NZP CSI-RS resource for interference measurement, a CSI-interference measurement (IM) resource, and the like. Note that CSI-IM may be referred to as CSI-interference management (IM), and may be interchangeably interpreted as zero power (ZP) CSI-RS. Note that, in the present disclosure, the CSI-RS, the NZP CSI-RS, the ZP CSI-RS, the CSI-IM, a CSI-SSB, and the like may be interchangeably interpreted.

Note that the transmitting section and the receiving section of the user terminal 20 in the present disclosure may be constituted with at least one of the transmitting/receiving section 220 and the transmitting/receiving antennas 230.

The transmitting/receiving section 220 may receive at least one of first information related to a maximum rank for a first transmission scheme and second information related to a maximum rank for a second transmission scheme, and downlink control information having a field used to indicate association between a phase tracking reference signal (PTRS) and a demodulation reference signal (DMRS). The control section 210 may judge the number of bits of the field, based on at least one of the first information and the second information when the second transmission scheme is configured.

The first transmission scheme is single-transmission/reception point transmission while the second transmission scheme is a space division multiplexing scheme in a multi-panel scheme or a single-frequency network scheme, and the control section 210 may judge the number of bits of the field of a case where the second transmission scheme is applied, based on the first information. The control section 210 may judge the number of bits of the field of the case where the second transmission scheme is applied, based on both the first information and the second information. The control section 210 may judge the number of bits of the field when the second transmission scheme is applied, based on at least one of the first information and the second information and another field of the downlink control information.

The transmitting/receiving section 220 may receive first downlink control information transmitted by using a first control resource set corresponding to a first control resource set pool index and second downlink control information transmitted by using a second control resource set corresponding to a second control resource set pool index. The control section 210 may perform control to transmit a first uplink shared channel scheduled by the first downlink control information and a second uplink shared channel scheduled by the second downlink control information and overlapping the first uplink shared channel in the time domain. The control section 210 may judge a maximum number of phase tracking reference signal (PTRS) ports corresponding to the first uplink shared channel and a maximum number of PTRS ports corresponding to the second uplink shared channel, based on information notified by higher layer signaling or a predefined value.

The transmitting/receiving section 220 may receive first information related to a maximum rank for a first transmission scheme for transmitting the first uplink shared channel and the second uplink shared channel overlapping in the time domain and second information related to a maximum rank for a second transmission scheme different from the first transmission scheme.

When the first transmission scheme is applied, the control section 210 may judge at least one of the number of bits of a field included in the first downlink control information and the number of bits of a field included in the second downlink control information, based on at least one of the first information and the second information.

The second transmission scheme may be single-transmission/reception point transmission, and the control section 210 may judge at least one of the number of bits of a field included in the first downlink control information and the number of bits of a field included in the second downlink control information, based on the second information.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

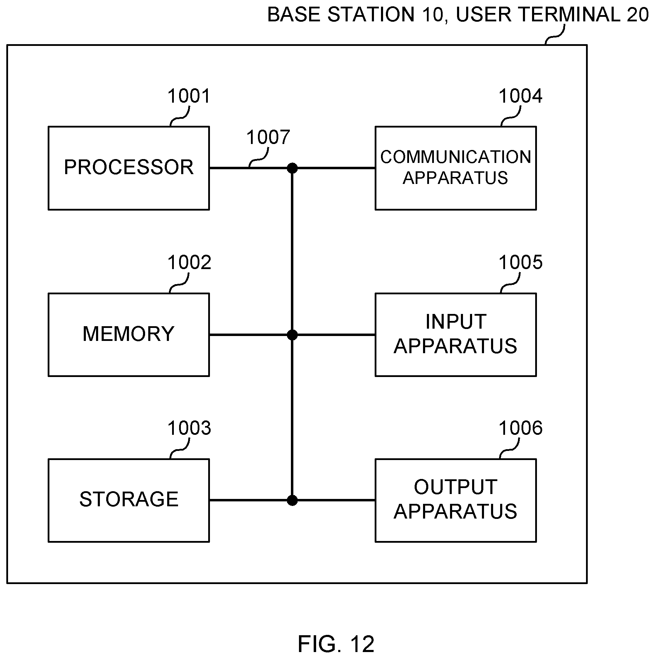

For example, a base station, a user terminal, and so on according to one embodiment of the present disclosure may function as a computer that executes the processes of the radio communication method of the present disclosure. FIG. 12 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

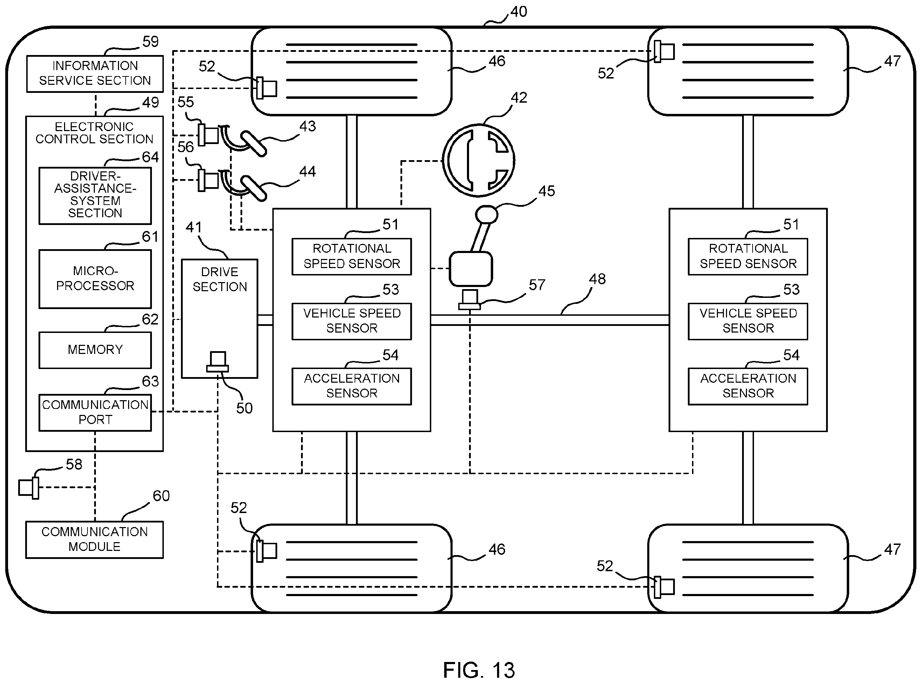

FIG. 13 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s) ..." ("..." may be expressed using, for example, a that-clause, a to-infinitive, or the like) may be used interchangeably with "be expected ...". "Does not expect ..." may be used interchangeably with "be not expected ...". Furthermore, "an apparatus A is not expected ..." may be used interchangeably with "an apparatus B other than the apparatus A does not expect ... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

## Claims

1. A terminal comprising:
a receiving section that receives at least one of first information related to a maximum rank for a first transmission scheme and second information related to a maximum rank for a second transmission scheme, and downlink control information having a field used to indicate association between a phase tracking reference signal (PTRS) and a demodulation reference signal (DMRS); and
a control section that judges the number of bits of the field, based on at least one of the first information and the second information when the second transmission scheme is configured.

2. The terminal according to claim 1, wherein
the first transmission scheme is single-transmission/reception point transmission while the second transmission scheme is a space division multiplexing scheme in a multi-panel scheme or a single-frequency network scheme, and the control section judges the number of bits of the field of a case where the second transmission scheme is applied, based on the first information.

3. The terminal according to claim 1, wherein
the first transmission scheme is single-transmission/reception point transmission while the second transmission scheme is a space division multiplexing scheme in a multi-panel scheme or a single-frequency network scheme, and the control section judges the number of bits of the field of a case where the second transmission scheme is applied based on both the first information and the second information.

4. The terminal according to claim 1, wherein
the first transmission scheme is single-transmission/reception point transmission while the second transmission scheme is a space division multiplexing scheme in a multi-panel scheme or a single-frequency network scheme, and the control section judges the number of bits of the field of a case where the second transmission scheme is applied, based on at least one of the first information and the second information, and another field of the downlink control information.

5. A radio communication method for a terminal, the radio communication method comprising:
receiving at least one of first information related to a maximum rank for a first transmission scheme and second information related to a maximum rank for a second transmission scheme, and downlink control information having a field used to indicate association between a phase tracking reference signal (PTRS) and a demodulation reference signal (DMRS); and
determining the number of bits of the field, based on at least one of the first information and the second information when the second transmission scheme is configured.

6. A base station comprising:
a transmitting section that transmits at least one of first information related to a maximum rank for a first transmission scheme and second information related to a maximum rank for a second transmission scheme, and downlink control information having a field used to indicate association between a phase tracking reference signal (PTRS) and a demodulation reference signal (DMRS); and
a control section that controls the number of bits of the field, based on at least one of the first information and the second information when the second transmission scheme is configured.
